(19) Europäisches Patentamt / European Patent Office / Office européen des brevets

(11) **EP 2 411 344 B1**

(12) **FASCICULE DE BREVET EUROPEEN**

(45) Date de publication et mention
de la délivrance du brevet:
**02.06.2021 Bulletin 2021/22**

(51) Int Cl.:
**C04B 28/04** *(2006.01)* **C04B 40/00** *(2006.01)*
**C04B 7/48** *(2006.01)*

(21) Numéro de dépôt: **10713483.5**

(22) Date de dépôt: **23.03.2010**

(86) Numéro de dépôt international:
**PCT/FR2010/000243**

(87) Numéro de publication internationale:
**WO 2010/112687 (07.10.2010 Gazette 2010/40)**

(54) **BETON A FAIBLE TENEUR EN CLINKER**

BETON MIT GERINGEM KLINKERANTEIL

CONCRETE WITH A LOW CLINKER CONTENT

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **24.03.2009 FR 0901364**

(43) Date de publication de la demande:
**01.02.2012 Bulletin 2012/05**

(73) Titulaire: **Holcim Technology Ltd**
**6300 Zug (CH)**

(72) Inventeurs:
• **SCHWARTZENTRUBER, Arnaud**
**F-69740 Genas (FR)**
• **MARTIN, Mylène**
**F-38200 Luzinay (FR)**
• **BENARD, Philippe**
**F-69008 Lyon (FR)**
• **SABIO, Serge**
**F-38540 Saint Just Chaleyssin (FR)**

(74) Mandataire: **Regimbeau**
**20, rue de Chazelles**
**75847 Paris Cedex 17 (FR)**

(56) Documents cités:
EP-A1- 0 990 627    WO-A1-2007/132098
CN-A- 1 125 698    CN-A- 1 245 787
CN-A- 101 074 149    CN-A- 101 143 775
FR-A1- 2 590 248    KR-A- 20030 068 720
US-A- 4 240 952    US-A- 4 313 763
US-A- 4 640 715    US-A- 5 374 308
US-A- 5 536 310    US-B1- 6 682 595

**Description**

DOMAINE DE L'INVENTION

L'invention concerne une composition de béton humide à faible teneur en clinker.

ARRIERE-PLAN TECHNIQUE

Dans le domaine des bétons structurels usuels, notamment des bétons de type C25/30 (c'est-à-dire dont la résistance caractéristique à la compression 28 jours après le gâchage, mesurée sur cylindre de 16x32 cm est d'au moins 25 MPa, et mesurée sur cube de 15x15 cm est d'au moins 30 MPa selon la norme EN 206-1), ou dans le cas des bétons de type C20/25 (dont la résistance caractéristique à la compression 28 jours après le gâchage, mesurée sur cylindre de 16x32 cm est d'au moins 20 MPa, et mesurée sur cube de 15x15 cm est d'au moins 25 MPa selon la norme EN 206-1) il a été constaté que la quantité de ciment est typiquement de 260 à 360 kg par $m^3$ de béton. Les normes européennes actuelles ne prévoient d'ailleurs pas de taux de ciment inférieurs à 260 kg/$m^3$ pour les bétons structurels courants.

Or les procédés de fabrication du ciment, et plus particulièrement de son constituant primordial, le clinker, sont à l'origine de fortes émissions de dioxyde de carbone. La production de grains de clinker suppose en effet :

a) le préchauffage et la décarbonatation de la farine crue qui est obtenue par broyage des matières premières, que sont notamment le calcaire et l'argile ; et
b) la cuisson ou clinkérisation de la farine à une température de 1450-1550°C, suivie par un brusque refroidissement.

Ces deux étapes sont productrices de $CO_2$, d'une part en tant que produit direct de la décarbonatation et d'autre part en tant que produit secondaire de la combustion qui est mise en œuvre à l'étape de cuisson pour fournir l'élévation en température.

Le taux d'émission atteint environ 560 kg de $CO_2$ par tonne de liant, pour un liant utilisé classiquement pour la fabrication d'un béton C25/30, qui contient 65 % de clinker (sur une base de 850 kg de $CO_2$ émis en moyenne par tonne de clinker).

Or les fortes émissions de dioxyde de carbone dans les procédés classiques de production de compositions cimentaires et de béton constituent un problème environnemental majeur, et, dans le contexte actuel, sont amenées à être fortement pénalisées sur le plan économique.

Il existe donc un fort besoin de composition permettant de produire du béton avec des émissions associées de dioxyde de carbone réduites, ledit béton présentant des propriétés mécaniques satisfaisantes et en particulier un béton du type C20/25 ou C25/30.

Avantageusement, le béton selon l'invention présente une moyenne arithmétique des résistances à la compression supérieure ou égale à 6 MPa, de préférence supérieure ou égale à 7 MPa, à 20°C 24 h après le gâchage, la mesure étant réalisée selon la norme EN 12390-3 sur éprouvettes cylindriques, conservées selon la norme EN 12390-2 à 20°C $\pm 2$°C et humidité relative supérieure à 95 %.

Avantageusement les propriétés rhéologiques du béton humide sont satisfaisantes et permettent une bonne maniabilité, c'est-à-dire que la consistance du mélange gâché convient pour permettre une manipulation aisée, même 2 heures après le gâchage.

Le document EP 990 627 décrit la préparation de béton présentant des propriétés de retrait améliorées à partir d'un mélange liant comprenant 10 à 20% en poids de schiste calciné ayant une surface spécifique supérieure à 6 000 cm$^2$/g, 20 à 50% en poids de clinker Portland ayant une surface spécifique Blaine de 2700 à 4500 cm$^2$/g, 15) 30% en poids de cendre volantes, 15 à 30% en poids d'anhydrite, jusqu'à 3% en poids d'un superplastifiant er jusqu'à 2% en poids d'un sulfate alcalin.

RESUME DE L'INVENTION

L'invention a donc pour objet une composition de béton humide selon les revendications 1 à 5, comprenant un pré-mélange liant sec comprenant, en proportions massiques :

- du clinker Portland présentant une surface spécifique Blaine comprise de 5500 à 8000 cm$^2$/g, la quantité minimale dudit clinker en pourcentage massique par rapport à la masse totale du pré-mélange étant déterminée selon la formule (I) suivante :

$$\left[\text{-6.10}^{-3} \times SSB_k\right] + 75$$

<div align="right">Formule (I)</div>

dans laquelle $SSB_k$ est la surface spécifique Blaine du clinker exprimée en $cm^2/g$ ;

- des cendres volantes ;
- au moins un sulfate alcalin, la quantité de sulfate alcalin étant telle que la quantité de $Na_2O$ équivalent dans le pré-mélange est supérieure ou égale à 5 % en pourcentage massique par rapport à la masse de cendres volantes ;
- au moins une source de $SO_3$, en une quantité telle que la quantité de $SO_3$ dans le pré-mélange est supérieure ou égale à 2 % en pourcentage massique par rapport à la masse de clinker Portland ;
- des matériaux complémentaires présentant un Dv90 inférieur ou égal à 200 $\mu$m choisis parmi les poudres calcaires, ;

la quantité de clinker + la quantité de cendres volantes étant supérieure ou égale à 75 %, de préférence 78 %, en pourcentage massique par rapport à la masse totale du pré-mélange ;
la quantité totale de clinker dans le pré-mélange étant strictement inférieure à 60 % en pourcentage massique par rapport à la masse totale du pré-mélange.

De préférence, le pré-mélange comprend en outre au moins une source de calcium.

De préférence, le sulfate alcalin du pré-mélange est choisi parmi le sulfate de sodium, le sulfate de potassium, le sulfate de lithium et leurs mélanges. Préférentiellement, le sulfate alcalin du pré-mélange est le sulfate de sodium.

De préférence, la source de calcium du pré-mélange est choisie parmi les sels de calcium et leurs mélanges.

Selon un mode de réalisation, le pré-mélange comprend également de 0,05 à 1,5 %, de préférence de 0,1 à 0,8 %, pourcentage en masse, d'un agent fluidifiant, de préférence de type polycarboxylate.

Les matériaux complémentaires représentent une charge inerte.

Selon un mode de réalisation de l'invention, le pré-mélange comprend en outre un accélérateur et / ou un agent entraîneur d'air et / ou un agent viscosant et / ou un retardateur et / ou un inertant des argiles et / ou un fluidifiant, ou leurs mélanges.

Est décrit également un mélange liant sec comprenant, en proportions massiques par rapport à la masse totale du mélange :

- au moins 10 % du pré-mélange susmentionné ; et
- jusqu'à 90 % de granulats.

Selon un mode de réalisation, les granulats comprennent du sable et des gravillons, le rapport massique de la quantité de sable sur la quantité de gravillons étant compris entre 1,5/1 et 1/1,8, de préférence entre 1,25/1 et 1/1,4, plus particulièrement entre 1,2/1 et 1/1,2.

Selon un mode de réalisation, les granulats comprennent du sable et des gravillons, le rapport massique de la quantité de sable sur la quantité de gravillons étant compris entre 1,5/1 et 1/1,8, de préférence entre 1,25/1 et 1/1,4, plus particulièrement entre 1,2/1 et 1/1,2.

Dans la composition de béton humide selon l'invention, la quantité d'eau efficace utilisée varie de 140 à 200 $l/m^3$, de préférence de 150 à 180 $l/m^3$ (voir EN 206-1 paragraphe 3.1.30).

Selon un mode de réalisation, la composition de béton humide selon l'invention est un béton à seuil.

Selon un mode de réalisation, la composition de béton humide selon l'invention présente une moyenne arithmétique des résistances à la compression supérieure ou égale à 6 MPa, à 20°C 24 heures après le gâchage.

Selon un autre mode de réalisation, la composition de béton humide selon l'invention présente une résistance caractéristique à la compression supérieure ou égale à 25 MPa, 28 jours après le gâchage.

Selon un second autre mode de réalisation, la composition de béton humide selon l'invention présente une résistance caractéristique à la compression supérieure ou égale à 20 MPa, 28 jours après le gâchage. Selon un troisième mode de réalisation, la composition de béton humide selon l'invention présente une moyenne arithmétique des résistances à la compression supérieure ou égale à 25 MPa, à 20°C 28 jours après le gâchage.

Selon un quatrième mode de réalisation, la composition de béton humide selon l'invention présente une moyenne arithmétique des résistances à la compression supérieure ou égale à 30 MPa, à 20°C 28 jours après le gâchage.

Selon un mode de réalisation, la composition de béton humide selon l'invention présente un étalement compris de 180 et 270 mm, de préférence de 215 et 235 mm, à partir du cône de la norme ASTM C230, à l'issue d'une durée de 1 minute et 45 secondes, dont 30 secondes en présence de vibrations de 50 Hz de fréquence et de 0,5 mm d'amplitude.

Selon un mode de réalisation de la composition de béton humide selon l'invention, l'affaissement au cône d'Abrams (ou valeur de slump) est compris entre 0 et 250 mm, de préférence entre 100 et 240 mm.

L'invention a également pour objet un objet en béton durci de la composition susmentionnée.

L'invention a également pour objet un procédé de préparation d'une composition de béton , le procédé étant tel que défini à la revendication 7.

Selon une variante du procédé de préparation d'une composition de béton humide selon l'invention, le gâchage est en outre réalisé en présence de sulfate de calcium.

Est décrit également un procédé de préparation d'une composition de béton humide comprenant une étape de gâchage de :

- clinker Portland présentant une surface spécifique Blaine comprise de 4500 à 9500 $cm^2$/g, de préférence comprise de 5500 à 8000 $cm^2$/g, la quantité minimale dudit clinker en kg/$m^3$ étant déterminée selon la formule (II) suivante :

$$\left[\left(-0{,}021 \times SSB_k\right) + 230\right] \times (E_{eff} \div 140)$$

Formule (II)

dans laquelle $SSB_k$ est la surface spécifique Blaine du clinker exprimée en $cm^2$/g,
$E_{eff}$ est la quantité d'eau efficace en l/$m^3$ ;
- des cendres volantes ;
- au moins un sulfate alcalin, la quantité de sulfate alcalin étant telle que la quantité de $Na_2O$ équivalent dans le liant est supérieure ou égale à 5 % en pourcentage massique par rapport à la masse de cendres volantes ;
- au moins une source de $SO_3$, en une quantité telle que la quantité de $SO_3$ dans le liant est supérieure ou égale à 2 % en pourcentage massique par rapport à la masse de clinker Portland ;
- matériaux complémentaires, présentant un Dv90 inférieur ou égal à 200 $\mu$m choisis parmi les poudres calcaires, les schistes calcinés, les métakaolins, les fillers siliceux, les poudres de silice, les pouzzolanes, les laitiers, les cendres volantes et leurs mélanges, dont la quantité minimale en kg/$m^3$ est déterminée selon la formule (III) suivante :

la somme de (quantité de matériau complémentaire) + (quantité de cendres volantes)
+ (quantité de clinker) + (quantité de sulfate alcalin) + (quantité de source de $SO_3$ )
soit supérieur ou égal à 220 kg/$m^3$ de béton

Formule (III) ;

- de 1500 à 2200 kg/$m^3$, de préférence de 1700 à 2000 kg/$m^3$ de granulats ;
- un agent fluidifiant ;
- éventuellement un accélérateur et / ou un agent entraîneur d'air et / ou un agent viscosant et / ou un retardateur et / ou un inertant des argiles ; avec
- de 140 à 220 l/$m^3$ d'eau efficace,

la quantité totale de clinker dans le béton humide étant inférieure ou égale à 200 kg/$m^3$ ;
la quantité de clinker + la quantité de cendres volantes étant supérieure ou égale à 240 kg/$m^3$.

Le clinker et/ou les cendres volantes et/ou les matériaux complémentaires sont tels que définis ci-dessus en relation avec le pré-mélange.

La quantité d'eau efficace utilisée varie de 140 à 200 l/$m^3$, de préférence de 150 à 180 l/$m^3$.

L'invention a également pour objet un procédé de préparation d'un béton humide coulé, comprenant une étape de :

- coulage d'une composition de béton humide telle que définie à l'une quelconque des revendications 1 à 5 ou d'une composition de béton humide obtenue selon le procédé de la revendication 7.

L'invention a également pour objet un procédé de fabrication d'un objet en béton, comprenant une étape de :

- durcissement d'une composition de béton humide telle que définie à l'une quelconque des revendications 1 à 5 ou d'une composition de béton humide coulée telle que définie à la revendication 8 ou d'une composition de béton humide obtenue selon le procédé de la revendication 7.

L'invention a également pour objet l'utilisation d'au moins un sulfate alcalin et d'éventuellement au moins une source de calcium pour activer les cendres volantes dans une composition de béton humide selon l'invention ou dans un des procédés selon l'invention.

L'invention permet de répondre au besoin de réduction des émissions de $CO_2$ jusqu'ici insatisfait par les bétons connus. En effet la quantité de ciment (et en particulier de clinker) utilisée dans le cadre de la présente invention est inférieure à celle qui est traditionnellement nécessaire. Plus précisément, l'émission de $CO_2$ induite peut être réduite de l'ordre de 50 à 60% tout en conduisant à des bétons de type C25/30 ou C20/25. Par ailleurs, la rhéologie des compositions de béton humide demeure du même ordre que celle des compositions de béton classiques. En outre, l'invention permet, malgré un taux de clinker très faible, de conserver des résistances au jeune âge du même ordre de grandeur que celles obtenues avec une formulation ayant un taux classique de clinker.

Le béton obtenu selon l'invention présente également les avantages suivants :

- le coût des pré-mélanges liants secs selon l'invention peut être typiquement inférieur de 7 à 10 % au coût des pré-mélanges liants secs utilisés pour préparer un béton C25/30 ou C20/25 classique.

Les différents buts et avantages et modes de réalisations particuliers de l'invention sont obtenus grâce à une optimisation poussée de l'ensemble des paramètres de formulation, et notamment grâce à :

- une optimisation de l'empilement des grains des différents matériaux (permettant de minimiser la quantité d'eau pour un comportement rhéologique donné) ;
- l'optimisation de la topologie du mélange, c'est-à-dire la multiplication et l'homogénéité dans l'espace des interfaces d'adhésion entre particules de sable et / ou granulats par des « points de colle » d'hydrates de ciment (notamment *via* l'utilisation de grains de clinker environ 10 fois plus fins que ceux du ciment Portland ordinaire) ;
- la recherche d'une « chrono-formulation », c'est à dire l'utilisation d'une quantité minimale de clinker pour garantir l'acquisition de la résistance mécanique à court terme, tandis que d'autres matériaux liants sont présents en une quantité ajustée pour fournir l'acquisition de la résistance mécanique à plus long terme (prenant en quelque sorte le relais du clinker dans l'accroissement de la résistance mécanique) ;
- l'ajustement de la demande en eau totale par un choix de matériaux à relativement faible demande en eau totale (notamment faible porosité), ce qui permet aussi de maximiser la résistance à la compression ;
- l'optimisation des différents adjuvants et notamment de l'agent fluidifiant (superplastifiant), qui permet de maximiser la réduction de l'eau en optimisant la dispersion de la poudre et donc l'empilement.

## DESCRIPTION DE MODES DE REALISATION DE L'INVENTION

L'invention est maintenant décrite plus en détail et de façon non limitative dans la description qui suit.

Clinker :

Par « clinker » on entend selon la présente invention un clinker Portland tel que défini dans la norme EN 197-1 paragraphe 5.2.1.

Le clinker Portland pourra être obtenu à partir des ciments Portland classiques, et en particulier parmi les ciments décrits dans la norme européenne EN 197-1.

Un tel ciment pourrait être broyé et/ou coupé (par classification pneumatique) afin de fournir du clinker présentant les caractéristiques requises selon l'invention, à savoir une surface spécifique Blaine comprise de 5500 à 8000 $cm^2/g$ selon la norme EN 196-6 paragraphe 4.

Le clinker peut être qualifié de clinker ultrafin. Le ciment peut par exemple être broyé à l'aide d'un atelier de broyage comprenant un broyeur primaire de type meule ou vertical couplé à un broyeur finisseur de type Horomill©, pendulaire ou broyeur à boulets, ou broyeur à jets d'air. On peut également utiliser un sélecteur ou classificateur pneumatique de seconde, troisième génération ou bien de très haute efficacité.

On souhaite, en réduisant la taille du clinker, maximiser les distances de diffusion des grains de ciment de façon à maximiser l'homogénéité de la matrice à travers une répartition optimale des points de colle inter-particulaires.

Cendres volantes :

Les cendres volantes sont telles que définies dans la norme NF EN 197-1 paragraphe 5.2.4 ou la norme ASTM C618.

On décrit que les cendres volantes peuvent être partiellement remplacées par du laitier.

On décrit que les cendres volantes peuvent être partiellement ou totalement remplacées par de la fumée de silice.

Selon les deux variantes ci-dessus, le laitier ou la fumée de silice doivent être comptabilisés dans le liant pour les différents calculs.

Sulfate alcalin :

Le sulfate alcalin est de préférence choisi parmi le sulfate de sodium ($Na_2SO_4$), le sulfate de potassium ($K_2SO_4$), le sulfate de lithium ($Li_2SO_4$), le bisulfate de sodium ($NaHSO_4$), le bisulfate de potassium ($KHSO_4$), le bisulfate de lithium ($LiHSO_4$) et leurs mélanges. Préférentiellement, le sulfate alcalin est choisi parmi le sulfate de sodium, le sulfate de potassium, le sulfate de lithium et leurs mélanges. Encore plus préférentiellement, le sulfate alcalin est le sulfate de sodium.

Le sulfate alcalin peut être utilisé sous des formes diverses, et notamment sous forme de poudre ou de liquide.

La formule pour déterminer la quantité de $Na_2O$ équivalent dans le liant (clinker + cendres volantes + sulfate alcalin + source de $SO_3$ + éventuellement source de calcium + matériaux complémentaires) en pourcentage massique est la formule (IV) suivante :

$$Na_2O \text{ équivalent}_{(liant)} = [Na_2O] + 0,658 \times [K_2O] + 2,081 \times [Li_2O]$$

Formule (IV)

dans laquelle $[Na_2O]$, $[K_2O]$ et $[Li_2O]$ sont les pourcentages massiques de $Na_2O$, $K_2O$ et $Li_2O$ dans le liant (clinker + cendres volantes + sulfate alcalin + source de $SO_3$ + matériaux complémentaires + éventuellement source de calcium). Les pourcentages massiques de $Na_2O$, $K_2O$ et $Li_2O$ dans le liant peuvent par exemple être déterminés par fluorescence X à partir de la quantité de Na, K et Li présents dans le liant. Connaissant $Na_2O$ équivalent$_{(liant)}$, il suffit de multiplier cette valeur par la masse du liant et de la diviser par la masse de cendres volantes pour obtenir $Na_2O$ équivalent par rapport à la masse des cendres volantes.

La quantité de $Na_2O$ équivalent dans le liant est de préférence supérieure ou égale à 7 %, préférentiellement supérieure ou égale à 9 %, en pourcentage massique par rapport à la masse de cendres volantes.

Source de calcium :

La source de calcium est choisie parmi les sels de calcium et leurs mélanges. De préférence, les sels de calcium sont choisis parmi les bromures, chlorures, formiates, oxydes, hydroxydes, nitrates, nitrites, sulfates et leurs mélanges. Préférentiellement, la source de calcium est du sulfate de calcium, de l'hydroxyde de calcium, du chlorure de calcium, du bromure de calcium ou leurs mélanges. De préférence, la source de calcium est du sulfate de calcium.

Les hydroxydes de calcium peuvent être de préférence de la chaux, de la Portlandite ou leurs mélanges. Les sulfates de calcium peuvent être préférentiellement du gypse, du semi-hydrate, de l'anhydrite ou leurs mélanges.

La source de calcium peut être utilisée sous des formes diverses, et notamment sous forme de poudre ou de liquide.

Le sulfate alcalin et la source de calcium peuvent être particulièrement utiles pour activer les cendres volantes. Cette activation peut permettre d'obtenir les résistances mécaniques cibles, tant à 24 heures après le gâchage que à 28 jours après le gâchage.

$SO_3$ :

Le $SO_3$ peut être apporté par les différents constituants des compositions (pré-mélange, mélange liant sec ou béton humide) mais aussi par le sulfate de calcium classiquement utilisé pour le sulfatage du clinker (voir la norme EN 197-1 paragraphe 5.4.)

Le sulfate de calcium peut notamment être choisi parmi le gypse, le semi-hydrate, l'anhydrite ou leurs mélanges. Le sulfate de calcium peut exister à l'état naturel ou peut provenir de l'industrie sous forme de sous-produit de certains procédés industriels.

Selon une variante de l'invention, la quantité de sulfate de calcium peut par exemple être ajustée de manière conventionnelle afin de se situer à l'optimum de la résistance mécanique en compression à 24 h et à 20°C. De préférence, la quantité de sulfate de calcium, déterminée selon la méthode décrite dans la norme EN 196-2 paragraphe 8, se situe entre 2,0 et 3,5 %, en pourcentage massique de sulfate ($SO_3$) par rapport à la masse du mélange (clinker + cendres volantes + sulfate alcalin + matériaux complémentaires + sulfate de calcium).

La quantité de $SO_3$ peut par exemple être déterminée selon la méthode décrite dans la norme EN 196-2 paragraphe 8.

Matériaux complémentaires :

Par « matériaux complémentaires » on entend des matériaux sous forme de grains présentant un Dv90 inférieur ou égal à 200 μm, et de préférence un Dv97 inférieur ou égal à 200 μm.

Ces matériaux peuvent servir de matériaux de remplissage de la matrice, c'est-à-dire qu'ils peuvent combler les interstices entre les autres matériaux dont les grains ont des tailles supérieures.

La nature des matériaux complémentaires n'est pas un élément essentiel de la présente invention, dans la mesure où ce critère n'a pas d'influence (notamment négative) sur le résultat à atteindre en termes de résistances mécaniques. Aussi, il serait possible d'ajouter différents types de matériaux complémentaires, tels que listés ci-après, sans compromettre les résistances à 28 jours ou à 24 heures des bétons obtenus. En particulier, un matériau complémentaire inerte serait le cas le plus défavorable du point de vue des résistances mécaniques. Par conséquent, un matériau complémentaire non inerte permettrait d'améliorer les résistances mécaniques du béton obtenu, que ce soit à 24 heures ou à 28 jours par rapport à une même formulation selon l'invention comprenant un matériau complémentaire inerte.

Bien que l'on puisse envisager que les matériaux complémentaires soient des matériaux liants, l'optimisation (notamment en terme de coût) des bétons selon l'invention conduit à choisir que les matériaux complémentaires soient une charge inerte, c'est-à-dire soient des matériaux non-liants (sans activité hydraulique ou pouzzolanique).

On utilise comme matériaux complémentaires des poudres calcaires (fillers calcaires). On décrit également des schistes calcinés, des métakaolins, des fillers siliceux ou des poudres de silice, des pouzzolanes, du laitier, des cendres volantes ou leurs mélanges. On décrit que les matériaux complémentaires sont ceux décrits dans la norme EN 197-1 aux paragraphes 5.2.2 à 5.2.7. Selon l'invention, les matériaux complémentaires sont des poudres calcaires.

Le Dv97 (en volume) correspond au 97ème centile de la distribution de taille des particules, c'est-à-dire que 97 % des particules ont une taille inférieure au Dv97 et 3 % ont une taille supérieure au Dv97. De même, le Dv90 correspond au 90ème centile de la distribution de taille des particules, c'est-à-dire que 90 % des particules ont une taille inférieure au Dv90 et 10 % ont une taille supérieure au Dv90. De même, le Dv50 correspond au 50ème centile de la distribution de taille des particules, c'est-à-dire que 50 % des particules ont une taille inférieure au Dv50 et 50 % ont une taille supérieure au Dv50.

De manière générale, le Dv50, le Dv90, le Dv97 et les autres grandeurs du même type qui sont caractéristiques du profil granulométrique (distribution volumétrique) d'un ensemble de particules ou grains peuvent être déterminés par granulométrie laser pour les particules de taille inférieure à 200 μm, ou par tamisage pour les particules de taille supérieure à 200 μm.

Néanmoins, lorsque les particules individuelles ont une tendance à l'agrégation, il est préférable de déterminer leur taille par microscopie électronique, étant donné que la taille apparente mesurée par granulométrie par diffraction laser est alors plus importante que la taille particulaire réelle, ce qui est susceptible de fausser l'interprétation (agglomération et floculation).

Eau :

Le béton comprend différentes catégories d'eau. Tout d'abord, l'eau efficace est l'eau interne du béton, située entre les grains du squelette solide formé par les granulats, le clinker, le laitier et les matériaux complémentaires. L'eau efficace représente donc l'eau utile à l'hydratation et l'obtention de la consistance et des résistances mécaniques. D'autre part, le béton comprend de l'eau retenue par la porosité des granulats, des cendres volantes et des matériaux complémentaires. Cette eau n'est pas prise en compte dans l'eau efficace. On la suppose prisonnière et ne participant pas à l'hydratation du ciment et à l'obtention de la consistance. L'eau totale représente la totalité de l'eau présente dans le mélange (au moment du malaxage).

L'eau efficace est une notion normalisée et son mode de calcul est présenté dans la norme EN 206-1 page 17 paragraphe 3.1.30. La teneur en eau efficace est la différence entre la quantité d'eau totale contenue dans le béton frais et la quantité d'eau absorbable par les granulats, sachant que la quantité d'eau absorbable se déduit du coefficient d'absorption des granulats qui est mesuré selon la norme NF EN 1097-6 page 5 paragraphe 3.6 et l'annexe B associée.

Pré-mélanges liants secs :

Le pré-mélange liant sec comprend, en proportions massiques :

- du clinker Portland présentant une surface spécifique Blaine comprise de 5500 à 8000 cm$^2$/g, la quantité minimale dudit clinker en pourcentage massique par rapport à la masse totale du pré-mélange étant déterminée selon la formule (I) suivante :

$$\left[-6.10^{-3} \times SSB_k\right] + 75$$

Formule (I)

dans laquelle $SSB_k$ est la surface spécifique Blaine du clinker exprimée en $cm^2/g$ ;

- des cendres volantes ;
- au moins un sulfate alcalin, la quantité de sulfate alcalin étant telle que la quantité de $Na_2O$ équivalent dans le pré-mélange est supérieure ou égale à 5 % en pourcentage massique par rapport à la masse de cendres volantes ;
- au moins une source de $SO_3$, en une quantité telle que la quantité de $SO_3$ dans le pré-mélange est supérieure ou égale à 2 % en pourcentage massique par rapport à la masse de clinker Portland ;
- des matériaux complémentaires présentant un Dv90 inférieur ou égal à 200 $\mu$m choisis parmi les poudres calcaires ;

la quantité de clinker + la quantité de cendres volantes étant supérieure ou égale à 75 %, de préférence 78 %, en pourcentage massique par rapport à la masse totale du pré-mélange ; la quantité totale de clinker dans le pré-mélange étant strictement inférieure à 60 % en pourcentage massique par rapport à la masse totale du pré-mélange.

De préférence, la quantité minimale dudit clinker en pourcentage massique par rapport à la masse totale du pré-mélange est déterminée selon la formule (I bis) :

$$\left[-6.10^{-3} \times SSB_k\right] + 80$$

Formule (I bis)

dans laquelle $SSB_k$ est la surface spécifique Blaine du clinker exprimée en $cm^2/g$.

Les Formules (I) et (I bis) ci-avant, ainsi que les Formules (II), (II bis) et (II ter) décrites ci-après, ont été obtenues grâce à une approche expérimentale, c'est-à-dire en faisant varier plusieurs paramètres (notamment la quantité de clinker, la surface spécifique Blaine du clinker et la quantité d'eau efficace) et en recherchant une relation empirique entre ces différents paramètres. Les formules ainsi obtenues sont donc des lois empiriques, c'est-à-dire des « *lois qui semblent vérifier des faits expérimentaux, que l'on peut énoncer sans toutefois les démontrer théoriquement* ». Cette définition est issue du site http://fr.wikipedia.org/wiki/Loi empirique. (voir également Le problème de la découverte d'une loi empirique, A. A. Petrosjan, Voprosy Filosofii Moskva, 1983, n°12, pages 71-79). Aussi, les différentes unités sont équilibrées via les constantes présentes dans les formules. La valeur des constantes présentes dans les formules est ajustée en utilisant par exemple la méthode des moindres carrés, bien connue de l'homme du métier pour minimiser l'erreur entre les données expérimentales et l'équation déterminée (voir par exemple le site internet de Dec Formations : www.decformations.com/mathematiques/moindres_carres.php, ou encore le livre Méthodes statistiques Volume 2 - Méthodes d'analyse de régression linéaire simple et de régression multiple - Analyse de corrélation linéaire simple, Gérald Baillargeon, Editions SMG).

Par conséquent, les formules (I), (I bis), (II), (II bis) et (II ter) peuvent être utilisées simplement en remplaçant la surface spécifique Blaine du clinker et la quantité d'eau efficace exprimés dans les unités précisées dans la description ($cm^2/g$ ou $l/m^3$). Un exemple de calcul de la formule (II) est donné dans la suite de la présente description.

Le pourcentage de déviation autorisé sur les résultats des Formules (I), (I bis), (II), (II bis) et (II ter) est de +/- 5 %.

De préférence, la quantité minimale de clinker dans le pré-mélange peut être obtenue grâce au tableau ci-dessous, en fonction de la surface spécifique Blaine du clinker (en remplacement de l'utilisation des Formules (I) et (I bis)) :

| $SSB_k$ ($cm^2/g$) | Quantité minimale de clinker (% massique) | Quantité minimale de clinker préférentielle (% massique) |
|---|---|---|
| 4500 | 48 | 53 |
| 4600 | 47,4 | 52,4 |
| 4700 | 46,8 | 51,8 |
| 4800 | 46,2 | 51,2 |
| 4900 | 45,6 | 50,6 |
| 5000 | 45 | 50 |
| 5100 | 44,4 | 49,4 |

(suite)

| $SSB_k$ (cm²/g) | Quantité minimale de clinker (% massique) | Quantité minimale de clinker préférentielle (% massique) |
|---|---|---|
| 5200 | 43,8 | 48,8 |
| 5300 | 43,2 | 48,2 |
| 5400 | 42,6 | 47,6 |
| 5500 | 42 | 47 |
| 5600 | 41,4 | 46,4 |
| 5700 | 40,8 | 45,8 |
| 5800 | 40,2 | 45,2 |
| 5900 | 39,6 | 44,6 |
| 6000 | 39 | 44 |
| 6100 | 38,4 | 43,4 |
| 6200 | 37,8 | 42,8 |
| 6300 | 37,2 | 42,2 |
| 6400 | 36,6 | 41,6 |
| 6500 | 36 | 41 |
| 6600 | 35,4 | 40,4 |
| 6700 | 34,8 | 39,8 |
| 6800 | 34,2 | 39,2 |
| 6900 | 33,6 | 38,6 |
| 7000 | 33 | 38 |
| 7100 | 32,4 | 37,4 |
| 7200 | 31,8 | 36,8 |
| 7300 | 31,2 | 36,2 |
| 7400 | 30,6 | 35,6 |
| 7500 | 30 | 35 |
| 7600 | 29,4 | 34,4 |
| 7700 | 28,8 | 33,8 |
| 7800 | 28,2 | 33,2 |
| 7900 | 27,6 | 32,6 |
| 8000 | 27 | 32 |
| 8100 | 26,4 | 31,4 |
| 8200 | 25,8 | 30,8 |
| 8300 | 25,2 | 30,2 |
| 8400 | 24,6 | 29,6 |
| 8500 | 24 | 29 |
| 8600 | 23,4 | 28,4 |
| 8700 | 22,8 | 27,8 |
| 8800 | 22,2 | 27,2 |

(suite)

| SSB$_k$ (cm$^2$/g) | Quantité minimale de clinker (% massique) | Quantité minimale de clinker préférentielle (% massique) |
|---|---|---|
| 8900 | 21,6 | 26,6 |
| 9000 | 21 | 26 |
| 9100 | 20,4 | 25,4 |
| 9200 | 19,8 | 24,8 |
| 9300 | 19,2 | 24,2 |
| 9400 | 18,6 | 23,6 |
| 9500 | 18 | 23 |

Les matériaux complémentaires sont des poudres calcaires.

De préférence, le pré-mélange comprend en outre du sulfate de calcium.

Le clinker, le laitier et les matériaux complémentaires peuvent être préférentiellement combinés selon les proportions énoncées ci-dessus pour former des pré-mélanges liants secs (dépourvus d'eau ajoutée), destinés à être gâchés avec des granulats et de l'eau.

Préférentiellement, on peut prévoir dans ces pré-mélanges secs un ou plusieurs adjuvants classiquement utilisés dans le domaine : un accélérateur et / ou un agent entraîneur d'air et / ou un agent viscosant et / ou un retardateur et / ou un inertant des argiles et / ou un fluidifiant. En particulier, il peut être utile d'inclure un fluidifiant (superplastifiant), notamment de type polycarboxylate, en particulier de 0,05 à 1,5 %, de préférence de 0,1 à 0,8 %, en masse.

On entend par « inertant des argiles » toute molécule permettant de diminuer ou annuler l'effet néfaste des argiles sur les propriétés des liants hydrauliques. On peut notamment utiliser les inertants des argiles tels que décrits dans les documents WO 2006/032785 et WO 2006/032786.

Granulats :

Les granulats sont du type naturel tel que défini dans la norme XPP18-545, sachant que les granulats ont une taille maximale Dmax inférieure ou égale à 32 mm. Les granulats comprennent du sable (grains de taille maximale Dmax inférieure ou égale à 4 mm, tel que défini norme EN 12620), et/ou des gravillons (granulats de taille minimale Dmin supérieure ou égale à 2 mm, tel que défini norme EN 12620).

Les granulats peuvent être de nature calcaire, siliceuse ou silico-calcaire.

Le sable et les gravillons peuvent être roulés ou concassés. Un sable concassé comprend une proportion de fines plus importante qu'un sable roulé. Selon le vocabulaire en usage dans le domaine du sable, les fines sont les grains de dimension inférieure à 63 μm (passant de tamis).

Lorsque le sable comprend des fines en quantité supérieure à 1 % (fraction massique dans le sable), il importe de tenir compte de la quantité de fines apportée par le sable, en diminuant la quantité des « matériaux complémentaires » décrites ci-dessus d'une quantité égale à la quantité de fines présente dans le sable (fraction inférieure à 63 μm) au-delà du seuil de 1 %.

De préférence, la teneur en argile dans le sable et les granulats est inférieure à 1 %. En effet, de fortes teneurs d'argiles affectent négativement l'ouvrabilité des bétons.

De préférence le rapport massique de la quantité de sable sur la quantité de gravillons est comprise entre 1,5/1 et 1/1,8, plus particulièrement entre 1,25/1 et 1/1,4, notamment entre 1,2/1 et 1/1,2, et idéalement est égal ou proche de 1/1.

Mélanges liants secs :

Les granulats, le clinker, les cendres volantes, les matériaux complémentaires, les sulfates alcalins, les éventuels adjuvants (notamment agent fluidifiant) peuvent être associés en mélanges liants secs (dépourvus d'eau ajoutée). De tels mélanges liants secs peuvent être préparés soit en mélangeant un pré-mélange sus-défini avec les granulats, soit en mélangeant directement les différents constituants *ab initio.*

Les proportions massiques par rapport à la masse totale du mélange des différents constituants peuvent alors être définies comme suit :

- au moins 10 % du pré-mélange susmentionné ; et
- jusqu'à'90 % de granulats.

Les matériaux complémentaires sont des poudres calcaires.

De préférence, le mélange liant sec comprend en outre du sulfate de calcium.

Un mélange liant sec ainsi défini est un béton sec prêt à l'emploi, utilisable par simple gâchage avec l'eau.

Selon une variante du mélange liant sec, les proportions massiques par rapport à la masse totale du mélange des différents constituants peuvent être définies comme suit :

- au moins 10 % du pré-mélange susmentionné ; et
- jusqu'à 90 % de gravillons.

Les matériaux complémentaires sont des poudres calcaires.

De préférence, le mélange liant sec comprend en outre du sulfate de calcium.

Selon une variante du mélange liant sec, les proportions massiques par rapport à la masse totale du mélange des différents constituants peuvent être définies comme suit :

- au moins 10 % du pré-mélange susmentionné ; et
- jusqu'à 90 % de sable.

Les matériaux complémentaires sont des poudres calcaires.

De préférence, le mélange liant sec comprend en outre du sulfate de calcium.

Béton :

Par le terme « béton humide » selon l'invention on entend le béton frais (voir norme EN 206-1 paragraphe 3.1.2).

Le béton humide selon l'invention est préparé en gâchant :

- au moins 10 % du pré-mélange susmentionné ; et
- jusqu'à 90 % de granulats ;
- avec de 140 à 220 l/m$^3$ d'eau efficace.

Les pourcentages massiques étant exprimés par rapport à la masse totale sèche du béton.

Les matériaux complémentaires sont des poudres calcaires.

De préférence, le béton humide selon l'invention comprend en outre du sulfate de calcium.

Le béton humide peut également être préparé directement en gâchant le mélange sec défini ci-dessus avec de 140 à 220 l/m$^3$ d'eau efficace.

Le béton selon l'invention peut également être préparé en gâchant directement les différents ingrédients entre eux et avec de l'eau. On décrit un procédé de préparation d'une composition de béton humide comprenant une étape de gâchage de :

- clinker Portland présentant une surface spécifique Blaine comprise de 4500 à 9500 cm$^2$/g, de préférence comprise de 5500 à 8000 cm$^2$/g, la quantité minimale dudit clinker en kg/m$^3$ étant déterminée selon la formule (II) suivante :

$$\left[\left(-0{,}021 \times SSB_k\right) + 230\right] \times (E_{eff} \div 140)$$

Formule (II)

dans laquelle $SSB_k$ est la surface spécifique Blaine du clinker exprimée en cm$^2$/g,
$E_{eff}$ est la quantité d'eau efficace en l/m$^3$ ;

- des cendres volantes ;
- au moins un sulfate alcalin, la quantité de sulfate alcalin étant telle que la quantité de $Na_2O$ équivalent dans le liant est supérieure ou égale à 5 % en pourcentage massique par rapport à la masse de cendres volantes ;
- au moins une source de $SO_3$, en une quantité telle que la quantité de $SO_3$ dans le liant est supérieure ou égale à 2 % en pourcentage massique par rapport à la masse de clinker Portland ;
- matériaux complémentaires, présentant un Dv90 inférieur ou égal à 200 μm choisis parmi les poudres calcaires, les schistes calcinés, les métakaolins, les fillers siliceux, les poudres de silice, les pouzzolanes, les laitiers, les cendres volantes et leurs mélanges, dont la quantité minimale en kg/m$^3$ est déterminée selon la formule (III) suivante :

$$\text{la somme de (quantité de matériau complémentaire) + (quantité de cendres volantes)}$$
$$\text{+ (quantité de clinker) + (quantité de sulfate alcalin) + (quantité de source de SO}_3\text{)}$$
$$\text{soit supérieur ou égal à 220 kg/m}^3 \text{ de béton}$$

Formule (III) ;

- de 1500 à 2200 kg/m$^3$, de préférence de 1700 à 2000 kg/m$^3$ de granulats ;
- un agent fluidifiant ;
- éventuellement un accélérateur et / ou un agent entraîneur d'air et / ou un agent viscosant et / ou un retardateur et / ou un inertant des argiles ; avec
- de 140 à 220 l/m$^3$ d'eau efficace,

la quantité totale de clinker dans le béton humide étant inférieure ou égale à 200 kg/m$^3$ ;
la quantité de clinker + la quantité de cendres volantes étant supérieure ou égale à 240 kg/m$^3$. Préférentiellement, les matériaux complémentaires sont des poudres calcaires.

De préférence, la quantité minimale dudit clinker en kg/m$^3$ est déterminée selon la formule (II bis) suivante :

$$\left[\left(-0{,}021 \times SSB_k\right) + 250\right] \times (E_{eff} \div 140)$$

Formule (II bis)

dans laquelle $SSB_k$ est la surface spécifique Blaine du clinker exprimée en cm$^2$/g,
$E_{eff}$ est la quantité d'eau efficace en l/m$^3$.

Préférentiellement, la quantité minimale dudit clinker en kg/m$^3$ est déterminée selon la formule (II ter) suivante :

$$\left[\left(-0{,}021 \times SSB_k\right) + 270\right] \times (E_{eff} \div 140)$$

Formule (II ter)

dans laquelle $SSB_k$ est la surface spécifique Blaine du clinker exprimée en cm$^2$/g,
$E_{eff}$ est la quantité d'eau efficace en l/m$^3$.

Si la quantité de clinker calculée à partir des formules (II), (II bis) et (II ter) ci-dessus est supérieure à 200 kg/m$^3$, alors la composition de béton humide réalisée à partir de ce clinker n'est pas comprise dans la description, c'est-à-dire dans les bétons à faible teneur en clinker.

Comme expliqué en rapport avec les Formules (I) et (I bis), les Formules (ii), (II bis) et (II ter) sont des formules empiriques, qui peuvent être utilisées simplement en remplaçant la surface spécifique Blaine du clinker et la quantité d'eau efficace exprimés dans les unités précisées dans la description (cm2/g ou l/m$^3$). Par exemple, pour appliquer la formule (II) avec les valeurs de l'exemple CV1-1, pour lequel la surface spécifique Blaine du clinker est égal à 7041 cm$^2$/g et la quantité d'eau efficace est égale à 165,1 l/m$^3$, alors la quantité minimale de clinker est égale à :

$[(-0{,}021 \times SSB_k) + 230] \times (E_{ff} \div 140)$
$[(-0{,}021 \times 7041) + 230] \times (165{,}1 \div 140)$
$[-147{,}861 + 230] \times 1{,}18$
$82{,}139 \times 1{,}18$
$96{,}9$ kg/m$^3$.

De préférence, la quantité minimale de clinker dans le béton peut être obtenue grâce au tableau ci-après, en fonction de la surface spécifique Blaine du clinker et de la quantité d'eau efficace (en remplacement de l'utilisation des Formules (II), (II bis) et (II ter)) :

| SSB$_k$ (cm$^2$/g) | Quantité minimale de clinker (kg/m$^3$) | | | | | | | | |
|---|---|---|---|---|---|---|---|---|---|
| | E$_{eff}$ = 140 l/m$^3$ | E$_{eff}$ = 150 l/m$^3$ | E$_{eff}$ = 160 l/m$^3$ | E$_{eff}$ =170 l/m$^3$ | E$_{eff}$ = 180 l/m$^3$ | E$_{eff}$ =190 l/m$^3$ | E$_{eff}$ = 200 l/m$^3$ | E$_{eff}$ = 210 l/m$^3$ | E$_{eff}$ = 220 l/m$^3$ |
| 4500 | 135,5 | 145,18 | 154,86 | 164,54 | 174,21 | 183,89 | 193,57 | 203,25 | 212,93 |
| 4600 | 133,4 | 142,93 | 152,46 | 161,99 | 171,51 | 181,04 | 190,57 | 200,1 | 209,63 |
| 4700 | 131.3 | 140,68 | 150,06 | 159,44 | 168,81 | 178,19 | 187,57 | 196,95 | 206.33 |
| 4800 | 129,2 | 138,43 | 147,66 | 156,89 | 166,11 | 175,34 | 184,57 | 193,8 | 203,03 |
| 4900 | 127,1 | 136,18 | 145,26 | 154,34 | 163,41 | 172,49 | 181,57 | 190,65 | 199,73 |
| 5000 | 125 | 133,93 | 142,86 | 151,79 | 160,71 | 169,64 | 178,57 | 187,5 | 196,43 |
| 5100 | 122,9 | 131,68 | 140,46 | 149,24 | 158,01 | 166,79 | 175,57 | 184,35 | 193,13 |
| 5200 | 120,8 | 129,43 | 138,06 | 146,69 | 155,31 | 163,94 | 172,57 | 181,2 | 189,83 |
| 5300 | 118,7 | 127,18 | 135,66 | 144,14 | 152,61 | 161,09 | 169,57 | 178,05 | 186,53 |
| 5400 | 116,6 | 124.93 | 133,26 | 141,59 | 149,91 | 158,24 | 166,57 | 174,9 | 183,23 |
| 5500 | 114,5 | 122,68 | 130,86 | 139,04 | 147,21 | 155,39 | 163,57 | 171,75 | 179,93 |
| 5600 | 112.4 | 120,43 | 128,46 | 136,49 | 144,51 | 152,54 | 160,57 | 168,6 | 176,63 |
| 5700 | 110,3 | 118,18 | 126,06 | 133,94 | 141,81 | 149,69 | 157,57 | 165,45 | 173,33 |
| 5800 | 108,2 | 115,93 | 123,66 | 131,39 | 139,11 | 146,84 | 154,57 | 162,3 | 170,03 |
| 5900 | 106,1 | 113,68 | 121,26 | 128,84 | 136,41 | 143,99 | 151,57 | 159,15 | 166,73 |
| 6000 | 104 | 111,43 | 118,86 | 126,29 | 133,71 | 141,14 | 148,57 | 156 | 163,43 |
| 6100 | 101.9 | 109,18 | 116,46 | 123,74 | 131,01 | 138,29 | 145,57 | 152,85 | 160,13 |
| 6200 | 99,8 | 106,93 | 114,06 | 121,19 | 128,31 | 135,44 | 142,57 | 149,7 | 156,83 |
| 6300 | 97,7 | 104,68 | 111,66 | 118,64 | 125,61 | 132,59 | 139,57 | 146,55 | 153,53 |
| 6400 | 95,6 | 102,43 | 109,26 | 116,09 | 122,91 | 129,74 | 136,57 | 143,4 | 150,23 |
| 6500 | 93,5 | 100,18 | 106,86 | 113,54 | 120,21 | 126,89 | 133,57 | 140,25 | 146,93 |
| 6600 | 91,4 | 97,93 | 104,46 | 110,99 | 117,51 | 124,04 | 130,57 | 137,1 | 143,63 |
| 6700 | 89,3 | 95,68 | 102,06 | 108,44 | 114,81 | 121,19 | 127,57 | 133,95 | 140,33 |
| 6800 | 87,2 | 93,43 | 99,66 | 105,89 | 112,11 | 118,34 | 124,57 | 130,8 | 137,03 |
| 6900 | 85,1 | 91,18 | 97,26 | 103,34 | 109,41 | 115,49 | 121,57 | 127,65 | 133,73 |
| 7000 | 83 | 88,93 | 94,86 | 100,79 | 106,71 | 112,64 | 118,57 | 124,5 | 130,43 |
| 7100 | 80,9 | 86,68 | 92,46 | 98,24 | 104,01 | 109,79 | 115,57 | 121,35 | 127,13 |
| 7200 | 78,8 | 84,43 | 90,06 | 95,69 | 101,31 | 106,94 | 112,57 | 118,2 | 123,83 |
| 7300 | 76,7 | 82,18 | 87,66 | 93,14 | 98,61 | 104,09 | 109,57 | 115,05 | 120,53 |
| 7400 | 74,6 | 79,93 | 85,26 | 90,59 | 95,91 | 101,24 | 106,57 | 111,9 | 117,23 |
| 7500 | 72,5 | 77,68 | 82,86 | 88,04 | 93,21 | 98,39 | 103,57 | 108,75 | 113,93 |
| 7600 | 70,4 | 75,43 | 80,46 | 85,49 | 90,51 | 95,54 | 100,57 | 105,6 | 110,63 |
| 7700 | 68,3 | 73,18 | 78,06 | 82,94 | 87,81 | 92,69 | 97,57 | 102,45 | 107,33 |
| 7800 | 66,2 | 70,93 | 75,66 | 80,39 | 85,11 | 89,84 | 94,57 | 99,3 | 104,03 |
| 7900 | 64,1 | 68,68 | 73,26 | 77,84 | 82,41 | 86,99 | 91,57 | 96,15 | 100,73 |
| 8000 | 62 | 66,43 | 70,86 | 75,29 | 79,71 | 84,14 | 88,57 | 93 | 97,43 |

(suite)

| SSB$_k$ (cm$^2$/g) | Quantité minimale de clinker (kg/m$^3$) | | | | | | | | |
|---|---|---|---|---|---|---|---|---|---|
| | E$_{eff}$ = 140 l/m$^3$ | E$_{eff}$ = 150 l/m$^3$ | E$_{eff}$ = 160 l/m$^3$ | E$_{eff}$ =170 l/m$^3$ | E$_{eff}$ = 180 l/m$^3$ | E$_{eff}$ =190 l/m$^3$ | E$_{eff}$ = 200 l/m$^3$ | E$_{eff}$ = 210 l/m$^3$ | E$_{eff}$ = 220 l/m$^3$ |
| 8100 | 59,9 | 64,18 | 68,46 | 72,74 | 77,01 | 81,29 | 85,57 | 89,85 | 94,13 |
| 8200 | 57,8 | 61,93 | 66,06 | 70,19 | 74,31 | 78,44 | 82,57 | 86,7 | 90,83 |
| 8300 | 55,7 | 59,68 | 63,66 | 67,64 | 71,61 | 75,59 | 79,57 | 83,55 | 87,53 |
| 8400 | 53,6 | 57.43 | 61,26 | 65,09 | 68,91 | 72,74 | 76,57 | 80,4 | 84,23 |
| 8500 | 51,5 | 55,18 | 58,86 | 62,54 | 66,21 | 69,89 | 73,57 | 77,25 | 80,93 |
| 8600 | 49,4 | 52,93 | 56,46 | 59,99 | 63,51 | 67,04 | 70,57 | 74,1 | 77,63 |
| 8700 | 47,3 | 50,68 | 54,06 | 57,44 | 60,81 | 64,19 | 67,57 | 70,95 | 74,33 |
| 8800 | 45,2 | 48,43 | 51,66 | 54,89 | 58,11 | 61,34 | 64,57 | 67,8 | 71,03 |
| 8900 | 43,1 | 46,18 | 49,26 | 52,34 | 55,41 | 58,49 | 61,57 | 64,65 | 67,73 |
| 9000 | 41 | 43,93 | 46,86 | 49,79 | 52,71 | 55,64 | 58,57 | 61,5 | 64,43 |
| 9100 | 38,9 | 41,68 | 44,46 | 47,24 | 50,01 | 52,79 | 55,57 | 58,35 | 61.13 |
| 9200 | 36,8 | 39,43 | 42,06 | 44,69 | 47,31 | 49,94 | 52,57 | 55,2 | 57,83 |
| 9300 | 34.7 | 37.18 | 39,66 | 42,14 | 44,61 | 47,09 | 49,57 | 52,05 | 54,53 |
| 9400 | 32,6 | 34,93 | 37,26 | 39,59 | 41,91 | 44,24 | 46,57 | 48,9 | 51,23 |
| 9500 | 30,5 | 32,68 | 34,86 | 37,04 | 39,21 | 41,39 | 43,57 | 45,75 | 47,93 |

| SSB$_k$ (cm$^2$/g) | Quantité minimale préférentielle de clinker (kg/m$^3$) | | | | | | | | |
|---|---|---|---|---|---|---|---|---|---|
| | E$_{eff}$ = 140 l/m$^3$ | E$_{eff}$ = 150 l/m$^3$ | E$_{eff}$ = 160 l/m$^3$ | E$_{eff}$ = 170 l/m$^3$ | E$_{eff}$ = 180 l/m$^3$ | E$_{eff}$ = 190 l/m$^3$ | E$_{eff}$ = 200 l/m$^3$ | E$_{eff}$ = 210 l/m$^3$ | E$_{eff}$ = 220 l/m$^3$ |
| 4500 | 155,5 | 166,61 | 177,71 | 188,82 | 199,93 | 211,04 | 222,14 | 233,25 | 244,36 |
| 4600 | 153,4 | 164,36 | 175,31 | 186,27 | 197,23 | 208,19 | 219,14 | 230,1 | 241,06 |
| 4700 | 151,3 | 162,11 | 172,91 | 183,72 | 194,53 | 205,34 | 216,14 | 226,95 | 237,76 |
| 4800 | 149,2 | 159,86 | 170,51 | 181,17 | 191,83 | 202,49 | 213,14 | 223,8 | 234,46 |
| 4900 | 147,1 | 157,61 | 168,11 | 178,62 | 189,13 | 199,64 | 210,14 | 220,65 | 231,16 |
| 5000 | 145 | 155,36 | 165,71 | 176,07 | 186,43 | 196,79 | 207,14 | 217,5 | 227,86 |
| 5100 | 142,9 | 153,11 | 163,31 | 173,52 | 183,73 | 193,94 | 204,14 | 214,35 | 224,56 |
| 5200 | 140,8 | 150,86 | 160,91 | 170,97 | 181,03 | 191,09 | 201,14 | 211,2 | 221,26 |
| 5300 | 138,7 | 148,61 | 158,51 | 168,42 | 178,33 | 188,24 | 198,14 | 208,05 | 217,96 |
| 5400 | 136,6 | 146,36 | 156,11 | 165,87 | 175,63 | 185,39 | 195,14 | 204,9 | 214,66 |
| 5500 | 134,5 | 144,11 | 153,71 | 163,32 | 172,93 | 182,54 | 192,14 | 201,75 | 211,36 |
| 5600 | 132,4 | 141,86 | 151,31 | 160,77 | 170,23 | 179,69 | 189,14 | 198,6 | 208,06 |
| 5700 | 130,3 | 139,61 | 148,91 | 158,22 | 167,53 | 176,84 | 186,14 | 195,45 | 204,76 |
| 5800 | 128,2 | 137,36 | 146,51 | 155,67 | 164,83 | 173,99 | 183,14 | 192,3 | 201,46 |
| 5900 | 126,1 | 135,11 | 144,11 | 153,12 | 162,13 | 171,14 | 180,14 | 189,15 | 198,16 |
| 6000 | 124 | 132,86 | 141,71 | 150,57 | 159,43 | 168,29 | 177,14 | 186 | 194,86 |

**EP 2 411 344 B1**

(suite)

| SSB$_k$ (cm²/g) | Quantité minimale préférentielle de clinker (kg/m³) | | | | | | | | |
|---|---|---|---|---|---|---|---|---|---|
| | E$_{eff}$ = 140 l/m³ | E$_{eff}$ = 150 l/m³ | E$_{eff}$ = 160 l/m³ | E$_{eff}$ = 170 l/m³ | E$_{eff}$ = 180 l/m³ | E$_{eff}$ = 190 l/m³ | E$_{eff}$ = 200 l/m³ | E$_{eff}$ = 210 l/m³ | E$_{eff}$ = 220 l/m³ |
| 6100 | 121,9 | 130,61 | 139,31 | 148,02 | 156,73 | 165,44 | 174,14 | 182.85 | 191,56 |
| 6200 | 119,8 | 128,36 | 136,91 | 145,47 | 154,03 | 162,59 | 171,14 | 179,7 | 188,26 |
| 6300 | 117,7 | 126,11 | 134,51 | 142,92 | 151,33 | 159,74 | 168,14 | 176,55 | 184,96 |
| 6400 | 115,6 | 123,86 | 132,11 | 140,37 | 148,63 | 156,89 | 165,14 | 173,4 | 181,66 |
| 6500 | 113,5 | 121,61 | 129,71 | 137,82 | 145,93 | 154,04 | 162,14 | 170,25 | 178,36 |
| 6600 | 111,4 | 119,36 | 127,31 | 135,27 | 143,23 | 151,19 | 159,14 | 167,1 | 175,06 |
| 6700 | 109,3 | 117,11 | 124,91 | 132,72 | 140,53 | 148,34 | 156,14 | 163,95 | 171,76 |
| 6800 | 107,2 | 114,86 | 122,51 | 130,17 | 137,83 | 145,49 | 153,14 | 160,8 | 168,46 |
| 6900 | 105,1 | 112,61 | 120,11 | 127,62 | 135,13 | 142,64 | 150,14 | 157,65 | 165,16 |
| 7000 | 103 | 110,36 | 117,71 | 125,07 | 132,43 | 139,79 | 147,14 | 154,5 | 161,86 |
| 7100 | 100,9 | 108,11 | 115,31 | 122,52 | 129,73 | 136,94 | 144,14 | 151,35 | 158,56 |
| 7200 | 98,8 | 105,86 | 112,91 | 119,97 | 127,03 | 134,09 | 141,14 | 148,2 | 155,26 |
| 7300 | 96,7 | 103,61 | 110,51 | 117,42 | 124,33 | 131,24 | 138,14 | 145,05 | 151,96 |
| 7400 | 94,6 | 101,36 | 108,11 | 114,87 | 121,63 | 128,39 | 135,14 | 141,9 | 148,66 |
| 7500 | 92,5 | 99,11 | 105,71 | 112,32 | 118,93 | 125,54 | 132,14 | 138,75 | 145,36 |
| 7600 | 90,4 | 96,86 | 103,31 | 109,77 | 116,23 | 122,69 | 129,14 | 135,6 | 142,06 |
| 7700 | 88,3 | 94,61 | 100,91 | 107,22 | 113,53 | 119,84 | 126,14 | 132,45 | 138,76 |
| 7800 | 86,2 | 92,36 | 98,51 | 104,67 | 110,83 | 116,99 | 123,14 | 129,3 | 135,46 |
| 7900 | 84,1 | 90,11 | 96,11 | 102,12 | 108,13 | 114,14 | 120,14 | 126,15 | 132,16 |
| 8000 | 82 | 87,86 | 93,71 | 99,57 | 105,43 | 111,29 | 117,14 | 123 | 128,86 |
| 8100 | 79,9 | 85,61 | 91,31 | 97,02 | 102,73 | 108,44 | 114,14 | 119,85 | 125,56 |
| 8200 | 77,8 | 83,36 | 88,91 | 94,47 | 100,03 | 105,59 | 111,14 | 116,7 | 122,26 |
| 8300 | 75,7 | 81,11 | 86,51 | 91,92 | 97,33 | 102,74 | 108,14 | 113,55 | 118,96 |
| 8400 | 73.6 | 78,86 | 84,11 | 89,37 | 94,63 | 99,89 | 105,14 | 110,4 | 115,66 |
| 8500 | 71,5 | 76,61 | 81,71 | 86,82 | 91,93 | 97,04 | 102,14 | 107,25 | 112,36 |
| 8600 | 69,4 | 74,36 | 79,31 | 84,27 | 89,23 | 94,19 | 99,14 | 104,1 | 109,06 |
| 8700 | 67,3 | 72,11 | 76,91 | 81,72 | 86,53 | 91,34 | 96,14 | 100,95 | 105,76 |
| 8800 | 65,2 | 69,86 | 74,51 | 79,17 | 83,83 | 88,49 | 93,14 | 97,8 | 102,46 |
| 8900 | 63,1 | 67,61 | 72,11 | 76,62 | 81,13 | 85,64 | 90,14 | 94,65 | 99,16 |
| 9000 | 61 | 65,36 | 69,71 | 74,07 | 78,43 | 82,79 | 87,14 | 91,5 | 95,86 |
| 9100 | 58,9 | 63,11 | 67,31 | 71,52 | 75,73 | 79,94 | 84,14 | 88,35 | 92,56 |
| 9200 | 56,8 | 60,86 | 64,91 | 68,97 | 73,03 | 77,09 | 81,14 | 85,2 | 89,26 |
| 9300 | 54,7 | 58,61 | 62,51 | 66,42 | 70,33 | 74,24 | 78,14 | 82,05 | 85,96 |
| 9400 | 52,6 | 56,36 | 60,11 | 63,87 | 67,63 | 71,39 | 75,14 | 78,9 | 82,66 |
| 9500 | 50,5 | 54,11 | 57,71 | 61,32 | 64,93 | 68,54 | 72,14 | 75,75 | 79,36 |

| SSB$_k$ (cm$^2$/g) | Quantité minimale plus préférentielle de clinker (kg/m$^3$) | | | | | | | | |
|---|---|---|---|---|---|---|---|---|---|
| | E$_{eff}$ = 140 l/m$^3$ | E$_{eff}$ = 150 l/m$^3$ | E$_{eff}$ = 160 l/m$^3$ | E$_{eff}$ = 170 l/m$^3$ | E$_{eff}$ = 180 l/m$^3$ | E$_{eff}$ = 190 l/m$^3$ | E$_{eff}$ = 200 l/m$^3$ | E$_{eff}$ = 210 l/m$^3$ | E$_{eff}$ = 220 l/m$^3$ |
| 4500 | 175,5 | 188,04 | 200,57 | 213,11 | 225,64 | 238,18 | 250,71 | 263,25 | 275,79 |
| 4600 | 173,4 | 185,79 | 198,17 | 210,56 | 222,94 | 235,33 | 247,71 | 260,1 | 272,49 |
| 4700 | 171.3 | 183,54 | 195,77 | 208,01 | 220,24 | 232,48 | 244,71 | 256,95 | 269,19 |
| 4800 | 169,2 | 181,29 | 193,37 | 205,46 | 217,54 | 229,63 | 241,71 | 253,8 | 265,89 |
| 4900 | 167,1 | 179,04 | 190,97 | 202,91 | 214,84 | 226,78 | 238,71 | 250,65 | 262,59 |
| 5000 | 165 | 176,79 | 188,57 | 200,36 | 212,14 | 223,93 | 235,71 | 247,5 | 259,29 |
| 5100 | 162,9 | 174,54 | 186,17 | 197,81 | 209,44 | 221,08 | 232,71 | 244,35 | 255,99 |
| 5200 | 160,8 | 172,29 | 183,77 | 195,26 | 206,74 | 218,23 | 229,71 | 241,2 | 252,69 |
| 5300 | 158,7 | 170,04 | 181,37 | 192,71 | 204,04 | 215,38 | 226,71 | 238,05 | 249,39 |
| 5400 | 156,6 | 167,79 | 178,97 | 190,16 | 201,34 | 212.53 | 223,71 | 234,9 | 246,09 |
| 5500 | 154,5 | 165,54 | 176,57 | 187,61 | 198,64 | 209,68 | 220,71 | 231,75 | 242,79 |
| 5600 | 152,4 | 163,29 | 174,17 | 185,06 | 195,94 | 206,83 | 217,71 | 228,6 | 239,49 |
| 5700 | 150,3 | 161,04 | 171,77 | 182,51 | 193,24 | 203,98 | 214,71 | 225,45 | 236,19 |
| 5800 | 148,2 | 158,79 | 169,37 | 179,96 | 190,54 | 201,13 | 211,71 | 222,3 | 232,89 |
| 5900 | 146,1 | 156,54 | 166,97 | 177,41 | 187,84 | 198,28 | 208,71 | 219,15 | 229,59 |
| 6000 | 144 | 154,29 | 164,57 | 174,86 | 185,14 | 195,43 | 205,71 | 216 | 226,29 |
| 6100 | 141,9 | 152,04 | 162,17 | 172,31 | 182,44 | 192,58 | 202,71 | 212,85 | 222,99 |
| 6200 | 139,8 | 149,79 | 159,77 | 169,76 | 179,74 | 189,73 | 199,71 | 209,7 | 219,69 |
| 6300 | 137,7 | 147,54 | 157,37 | 167,21 | 177,04 | 186,88 | 196,71 | 206,55 | 216,39 |
| 6400 | 135,6 | 145,29 | 154,97 | 164,66 | 174,34 | 184,03 | 193,71 | 203,4 | 213,09 |
| 6500 | 133,5 | 143,04 | 152,57 | 162,11 | 171,64 | 181,18 | 190,71 | 200,25 | 209,79 |
| 6600 | 131,4 | 140,79 | 150,17 | 159,56 | 168,94 | 178,33 | 187,71 | 197,1 | 206,49 |
| 6700 | 129,3 | 138,54 | 147,77 | 157,01 | 166,24 | 175,48 | 184,71 | 193,95 | 203,19 |
| 6800 | 127,2 | 136,29 | 145,37 | 154,46 | 163,54 | 172,63 | 181,71 | 190,8 | 199,89 |
| 6900 | 125,1 | 134,04 | 142,97 | 151,91 | 160,84 | 169,78 | 178,71 | 187,65 | 196,59 |
| 7000 | 123 | 131,79 | 140,57 | 149,36 | 158,14 | 166,93 | 175,71 | 184,5 | 193,29 |
| 7100 | 120,9 | 129,54 | 138,17 | 146,81 | 155,44 | 164,08 | 172,71 | 181,35 | 189,99 |
| 7200 | 118,8 | 127,29 | 135,77 | 144,26 | 152,74 | 161,23 | 169,71 | 178,2 | 186,69 |
| 7300 | 116,7 | 125,04 | 133,37 | 141,71 | 150,04 | 158,38 | 166,71 | 175,05 | 183,39 |
| 7400 | 114,6 | 122,79 | 130,97 | 139,16 | 147,34 | 155,53 | 163,71 | 171,9 | 180,09 |
| 7500 | 112.5 | 120,54 | 128,57 | 136,61 | 144,64 | 152,68 | 160,71 | 168,75 | 176,79 |
| 7600 | 110,4 | 118,29 | 126,17 | 134,06 | 141,94 | 149,83 | 157,71 | 165,6 | 173,49 |
| 7700 | 108,3 | 116,04 | 123,77 | 131,51 | 139,24 | 146,98 | 154,71 | 162,45 | 170,19 |
| 7800 | 106,2 | 113,79 | 121,37 | 128,96 | 136,54 | 144,13 | 151,71 | 159,3 | 166,89 |
| 7900 | 104,1 | 111,54 | 118,97 | 126,41 | 133,84 | 141,28 | 148,71 | 156,15 | 163,59 |
| 8000 | 102 | 109,29 | 116,57 | 123,86 | 131,14 | 138,43 | 145,71 | 153 | 160,29 |

(suite)

| SSB$_k$ (cm$^2$/g) | Quantité minimale plus préférentielle de clinker (kg/m$^3$) | | | | | | | | |
|---|---|---|---|---|---|---|---|---|---|
| | E$_{eff}$ = 140 l/m$^3$ | E$_{eff}$ = 150 l/m$^3$ | E$_{eff}$ = 160 l/m$^3$ | E$_{eff}$ = 170 l/m$^3$ | E$_{eff}$ = 180 l/m$^3$ | E$_{eff}$ = 190 l/m$^3$ | E$_{eff}$ = 200 l/m$^3$ | E$_{eff}$ = 210 l/m$^3$ | E$_{eff}$ = 220 l/m$^3$ |
| 8100 | 99,9 | 107,04 | 114,17 | 121,31 | 128,44 | 135,58 | 142,71 | 149,85 | 156,99 |
| 8200 | 97,8 | 104,79 | 111,77 | 118,76 | 125,74 | 132,73 | 139,71 | 146,7 | 153,69 |
| 8300 | 95,7 | 102,54 | 109,37 | 116,21 | 123,04 | 129,88 | 136,71 | 143,55 | 150,39 |
| 8400 | 93.6 | 100,29 | 106,97 | 113,66 | 120,34 | 127,03 | 133,71 | 140,4 | 147,09 |
| 8500 | 91,5 | 98,04 | 104,57 | 111,11 | 117,64 | 124,18 | 130,71 | 137,25 | 143,79 |
| 8600 | 89,4 | 95,79 | 102,17 | 108,56 | 114,94 | 121,33 | 127,71 | 134,1 | 140,49 |
| 8700 | 87,3 | 93,54 | 99,77 | 106,01 | 112,24 | 118,48 | 124,71 | 130,95 | 137,19 |
| 8800 | 85,2 | 91,29 | 97,37 | 103,46 | 109,54 | 115,63 | 121,71 | 127,8 | 133,89 |
| 8900 | 83,1 | 89,04 | 94,97 | 100,91 | 106,84 | 112,78 | 118,71 | 124,65 | 130,59 |
| 9000 | 81 | 86,79 | 92,57 | 98,36 | 104,14 | 109,93 | 115,71 | 121,5 | 127,29 |
| 9100 | 78,9 | 84,54 | 90,17 | 95,81 | 101,44 | 107,08 | 112,71 | 118,35 | 123,99 |
| 9200 | 76,8 | 82,29 | 87,77 | 93,26 | 98,74 | 104,23 | 109,71 | 115,2 | 120,69 |
| 9300 | 74,7 | 80,04 | 85,37 | 90,71 | 96,04 | 101,38 | 106,71 | 112,05 | 117,39 |
| 9400 | 72,6 | 77,79 | | 88,16 | 93,34 | 98,53 | | | 114,09 |
| 9500 | 70,5 | 75,54 | 80,57 | 85,61 | 90,64 | 95,68 | 100,71 | 105,75 | 110,79 |

De préférence, la quantité minimale en kg/m$^3$ de matériaux complémentaires présentant un Dv90 inférieur ou égal à 200 $\mu$m choisis parmi les poudres calcaires, les schistes calcinés, les métakaolins, les fillers siliceux, les poudres de silice, les pouzzolanes, les laitiers, les cendres volantes et leurs mélanges est déterminée selon la formule (III bis) suivante :

$$250 - (\text{quantité de cendres volantes}) - (\text{quantité de clinker}) - (\text{quantité de sulfate}$$
$$\text{alcalin}) - (\text{quantité de source de } SO_3)$$

Formule (III bis)

Si l'application de la formule (III) ou (III bis) ci-dessus donne une valeur inférieure à 0, cela signifie qu'il n'est pas nécessaire d'ajouter des matériaux complémentaires pour obtenir les performances annoncées.

Selon une variante, la composition de béton humide selon l'invention ne comprend pas d'agent fluidifiant. On entend par « agent fluidifiant » selon la présente invention un plastifiant réducteur d'eau ou superplastifiant haut réducteur d'eau selon la norme NF EN 934-2.

On entend par « kg/m$^3$ » la masse de matériaux à utiliser par m$^3$ de béton réalisé.

Les matériaux complémentaires sont des poudres calcaires.

On décrit une quantité dudit clinker utilisée qui est préférentiellement inférieure à 180 kg/m$^3$, préférentiellement inférieure à 150 kg/m$^3$, de préférence inférieure à 120 kg/m$^3$.

Selon un mode de réalisation du procédé décrit, la quantité d'eau efficace utilisée varie de 140 à 200 l/m$^3$, de préférence de 150 à 180 l/m$^3$. Selon certains modes, cette quantité d'eau efficace est donc réduite par rapport à un béton classique.

De préférence les granulats comprennent du sable et des gravillons et le rapport massique de la quantité de sable sur la quantité de gravillons est comprise entre 1,5/1 et 1/1,8, plus particulièrement entre 1,25/1 et 1/1,4, notamment entre 1,2/1 et 1/1,2, et idéalement est égal ou proche de 1/1.

Les matériaux en question présentent, selon des modes de réalisation particuliers, les mêmes caractéristiques que celles qui ont été décrites ci-dessus en relation avec les mélanges et pré-mélanges liants selon l'invention.

Le malaxage s'effectue au moyen d'un malaxeur conventionnel en centrale à béton ou directement dans un camion-toupie-malaxeur, pendant une durée de malaxage usuelle dans le domaine.

Les compositions de béton humide obtenues selon l'invention présentent des propriétés mécaniques comparables, de préférence au moins aussi bonnes voire meilleures par rapport aux bétons de type C25/30 classiques, notamment en terme de résistance à la compression à 16 h et à 28 jours et en terme de rhéologie.

En particulier, selon un mode de réalisation de l'invention, la résistance moyenne à la compression est supérieure ou égale à 6 MPa, de préférence supérieure ou égale à 7 MPa, à 20 °C 24 h après le gâchage, et supérieure ou égale à 25 MPa, de préférence supérieure ou égale à 28 MPa, 28 jours après le gâchage.

Selon un mode de réalisation du béton humide selon l'invention, l'affaissement au cône d'Abrams (ou valeur de slump) est compris entre 0 et 250 mm, de préférence entre 100 et 240 mm, la mesure étant effectuée selon la norme européenne EN 12350-2, de décembre 1999.

Selon un mode de réalisation du béton humide selon l'invention, l'étalement à une minute est compris entre 50 et 140 mm, de préférence entre 85 et 105 mm en utilisant le cône de la norme ASTM C230 en l'absence de vibrations.

Selon un mode de réalisation du béton humide selon l'invention, l'étalement à une minute est compris entre 180 et 270 mm, de préférence entre 215 et 235 mm en utilisant le cône de la norme ASTM C230 en présence de vibrations, la mesure étant effectuée comme indiqué à l'exemple 6 ci-dessous.

Ainsi les bétons selon l'invention présentent des propriétés rhéologiques équivalentes aux bétons C25/30 ou C20/25 classiques.

De préférence, les bétons selon l'invention sont des bétons à seuil. On entend par « béton à seuil » un béton (humide) qui nécessite l'apport d'une énergie positive (par exemple, une force de cisaillement, une vibration ou un choc) afin de déclencher son écoulement. Par opposition, un béton sans seuil s'écoule tout seul, sans apport d'énergie extérieure. Ainsi, le béton à seuil se comporte essentiellement, en dessous d'une énergie seuil, comme un solide élastique déformable ; et au-dessus de cette énergie seuil, comme un fluide visqueux.

La quantité de clinker utilisée pour préparer le béton selon l'invention est très inférieure à celle qui est nécessaire pour préparer un béton classique de type C25/30 ou C20/25, ce qui permet de réaliser des économies spectaculaires en terme d'émission de $CO_2$. Par rapport à une formule C25/30 de référence qui contient 95 kg/m$^3$ de calcaire et 257 kg/m$^3$ de ciment, un béton selon l'invention contenant par exemple entre 100 et 120 kg/m$^3$ de clinker permet de réaliser une économie d'émission de $CO_2$ de l'ordre de 50 à 60 %.

Le béton selon l'invention peut être coulé selon les méthodes usuelles ; après hydratation / durcissement on obtient des objets en béton durci tels que des éléments de construction, des éléments d'ouvrage d'art ou autres.

Les exemples suivants illustrent l'invention sans la limiter.

EXEMPLES

Méthode de granulométrie laser :

Les courbes granulométriques des différentes poudres sont obtenues à partir d'un granulomètre laser Malvern MS2000. La mesure s'effectue en voie humide (milieu aqueux) ; la taille des particules doit être comprise entre 0,02 $\mu$m et 2 mm. La source lumineuse est constituée par un laser rouge He-Ne (632 nm) et une diode bleue (466 nm). Le modèle optique est celui de Fraunhofer, la matrice de calcul est de type polydisperse.

Une mesure de bruit de fond est d'abord effectuée avec une vitesse de pompe de 2000 tr/min, une vitesse d'agitateur de 800 tr/min et une mesure du bruit sur 10 s, en l'absence d'ultrasons. Durant la phase de calibration / mesure de blanc de l'appareil, on vérifie que l'intensité lumineuse du laser est au moins égale à 80 %, et que l'on obtient une courbe exponentielle décroissante pour le bruit de fond. Si ce n'est pas le cas, les lentilles de la cellule doivent être nettoyées.

On effectue ensuite une première mesure sur l'échantillon avec les paramètres suivants : vitesse de pompe de 2000 tr/min, vitesse d'agitateur de 800 tr/min, absence d'ultrasons. L'échantillon est introduit pour avoir une obscuration comprise entre 10 et 20 %. On entend par « obscuration » l'extinction du signal laser par la suspension circulant entre l'émetteur et le capteur central (turbidimètre). Une obscuration de 100 % correspond à une extinction complète du signal. Au contraire, une obscuration de 0 % correspond au fluide pur translucide sans aucune particule. L'obscuration dépend de la concentration en solides de la suspension et de l'indice de réfraction des particules. Après stabilisation de l'obscuration, la mesure est effectuée avec une durée entre l'immersion et la mesure fixée à 10 s. La durée de mesure est de 30 s (30000 images de diffraction analysées). Dans le granulogramme obtenu, il faut tenir compte du fait qu'une partie de la population de la poudre peut être agglomérée.

On effectue ensuite une seconde mesure (sans vidanger la cuve) avec des ultrasons. La vitesse de pompe est portée à 2500 tr/min, l'agitation à 1000 tr/min, les ultrasons sont émis à 100 % (30 watts). Ce régime est maintenu pendant 3 minutes, puis on revient aux paramètres initiaux : vitesse de pompe de 2000 tr/min, vitesse d'agitateur de 800 tr/min, absence d'ultrasons. Au bout de 10 s (pour évacuer les bulles d'air éventuelles), on effectue une mesure de 30 s (30000 images analysées). Cette seconde mesure correspond à une poudre désagglomérée par dispersion ultrasonique.

Chaque mesure est répétée au moins deux fois pour vérifier la stabilité du résultat. L'appareil est étalonné avant chaque séance de travail au moyen d'un échantillon standard (silice C10 Sifraco) dont la courbe granulométrique est connue. Toutes les mesures présentées dans la description et les gammes annoncées correspondent aux valeurs obtenues avec ultrasons.

Méthode de mesure de la surface spécifique BET :

La surface spécifique des différentes poudres est mesurée comme suit. On prélève un échantillon de poudre de masse suivante: 0,1 à 0,2 g pour une surface spécifique estimée à plus de 30 $m^2/g$ ; 0,3 g pour une surface spécifique estimée à 10-30 $m^2/g$ ; 1 g pour une surface spécifique estimée à 3-10 $m^2/g$ ; 1,5 g pour une surface spécifique estimée à 2-3 $m^2/g$ ; 2 g pour une surface spécifique estimée à 1.5-2 $m^2/g$ ; 3 g pour une surface spécifique estimée à 1-1,5 $m^2/g$.

On utilise une cellule de 3 $cm^3$ ou de 9 $cm^3$ selon le volume de l'échantillon. On pèse l'ensemble de la cellule de mesure (cellule + tige en verre). Puis on ajoute l'échantillon dans la cellule : le produit ne doit pas être à moins d'un millimètre du haut de l'étranglement de la cellule. On pèse l'ensemble (cellule + tige en verre + échantillon). On met en place la cellule de mesure sur un poste de dégazage et on dégaze l'échantillon. Les paramètres de dégazage sont de 30 min / 45°C pour le ciment Portland, le gypse, les pouzzolanes ; de 3 h / 200°C pour les laitiers, fumées de silice, cendres volantes, ciment alumineux, calcaire ; et de 4 h / 300°C pour l'alumine de contrôle. La cellule est rapidement bouchée avec un bouchon après le dégazage. On pèse l'ensemble et on note le résultat. Toutes les pesées sont effectuées sans le bouchon. La masse de l'échantillon est obtenue par soustraction de la masse de la cellule à la masse de la cellule + échantillon dégazé.

On effectue ensuite l'analyse de l'échantillon après l'avoir mis en place sur le poste de mesure. L'analyseur est le SA 3100 de Beckman Coulter. La mesure repose sur l'adsorption d'azote par l'échantillon à une température donnée, ici la température de l'azote liquide soit -196°C. L'appareil mesure la pression de la cellule de référence dans laquelle l'adsorbat est à sa pression de vapeur saturante et celle de la cellule de l'échantillon dans laquelle des volumes connus d'adsorbat sont injectés. La courbe résultant de ces mesures est l'isotherme d'adsorption. Dans le processus de mesure, la connaissance du volume mort de la cellule est nécessaire : une mesure de ce volume est donc réalisée avec de l'hélium avant l'analyse.

La masse de l'échantillon calculée précédemment est entrée en tant que paramètre. La surface BET est déterminée par le logiciel par régression linéaire à partir de la courbe expérimentale. L'écart-type de reproductibilité obtenu à partir de 10 mesures sur une silice de surface spécifique 21,4 $m^2/g$ est de 0,07. L'écart-type de reproductibilité obtenu à partir de 10 mesures sur un ciment de surface spécifique 0,9 $m^2/g$ est de 0,02. Une fois toutes les deux semaines un contrôle est effectué sur un produit de référence. Deux fois par an, un contrôle est réalisé avec l'alumine de référence fournie par le constructeur.

Méthode de mesure de la surface spécifique Blaine :

La surface spécifique Blaine est déterminée selon la norme EN 196-6 paragraphe 4.

Matières premières utilisées :

Dans ce qui suit, on utilise plus particulièrement les matériaux suivants.

Ciment : on utilise un ciment CPA CEM I 52.5 R (provenance Lafarge Ciments - cimenterie de Saint-Pierre la Cour, dit « SPLC »). Ce ciment contient classiquement 90 à 95 % de clinker, 0,5 à 3 % de calcaire et 2 à 5 % de gypse + semi-hydrate + anhydrite et éventuellement des agents de mouture et / ou réducteurs du chrome VI. Ainsi, ce ciment comprend au moins 90 % de clinker. Ce ciment est micronisé au moyen d'un broyeur à jets d'air opposés Alpine Hosokawa AFG200. La vitesse de rotation de la turbine a été réglée de manière à obtenir la finesse voulue (16 ou 19 $\mu$m). Deux lots ont été utilisés lors des exemples. Un premier lot appelé « SPLC - dv97 = 16 $\mu$m » pour lequel la finesse est caractérisée par un dv97 égal à 16 $\mu$m, et un deuxième lot appelé « SPLC - dv97 = 19 $\mu$m » pour lequel la finesse est caractérisée par un dv97 égal à 19 $\mu$m.

Pour le béton témoin (C25/30 de référence), on utilise du ciment HTS CPA CEM I 52.5 PEMS dit « Le Teil » (fournisseur Lafarge).

Sulfate de calcium : on utilise de l'anhydrite broyée produite par Lafarge Plâtres - Carrière de Mazan, Vaucluse, France.

Cendres volantes : Quatre cendres volantes sont utilisées :

- une cendre volante de classe C (ASTM C618) provenant de la centrale thermique de TransAlta située à « Sundance », Alberta, Canada ;

- une cendre volante de classe V (NF EN 197-1) provenant de la centrale thermique EDF situé à « Le Havre », France ;
- une cendre volante de classe V (NF EN 197-1) provenant de la centrale thermique de « Popiol », Pologne ; et
- une cendre volante de classe W (EN 450-1) provenant de la centrale thermique de Termoelektrarna, Sostanj, Slovénie. Cette cendre sera appelée « TES ».

Matériaux complémentaires : on utilise le filler calcaire suivant :

- BL200 (fournisseur Omya) avec une surface spécifique BET de 0,86 $m^2$/g et une valeur au bleu de méthylène $MB_F$ de 0,3 g/100 g selon la norme NF EN 933-9.

Les caractéristiques des différents composants utilisés dans les exemples sont données dans le tableau ci-dessous :

| Nom | SPLC dv97=16$\mu$m | SPLC dv97=19 $\mu$m | Cendre volante Sundance | Cendre volante Le Havre | Cendre volante Popiol | Cendre volante TES | Sulfate de calcium | BL 200 |
|---|---|---|---|---|---|---|---|---|
| $SiC_2$ (%) | 20,15 | 20,38 | 54,70 | 50,98 | 49,66 | 48,69 | 1,69 | 0,00 |
| $Al_2O_3$ (%) | 4,91 | 4,85 | 23,28 | 26,73 | 24,80 | 19,01 | 0,27 | 0.03 |
| $Fe_2O_3$ (%) | 3,05 | 3,03 | 3,82 | 4,74 | 5,75 | 9,7 | 0,10 | 0.03 |
| CaO (%) | 64,62 | 64,71 | 10,92 | 4,14 | 3,85 | 11,75 | 38,81 | 55.55 |
| MgO (%) | 0,97 | 0,91 | 1,08 | 1,73 | 2,68 | 2,55 | 1,56 | 0.16 |
| $K_2O$ (%) | 0,92 | 0,86 | 0,84 | 1,65 | 3,00 | 2,21 | 0,05 | 0,00 |
| $Na_2O$ (%) | 0,21 | 0,16 | 3,15 | 0,53 | 0,99 | 1,06 | 0,04 | 0.03 |
| $SO_3$ (%) | 3,23 | 3,07 | 0,20 | 0,74 | 0,72 | 1,57 | 52,00 | 0,00 |
| Surface spécifique BET ($m^2$/g) | 1,83 | 1,60 | 1,31 | 2,38 | 3,94 | 6,99 | 8,1 | 0.79 |
| Surface Spécifique BLAINE ($cm^2$/g) | 7 041 | 6 364 | | | | | | 4 093 |
| Masse volumique (g/$cm^3$) | 3,18 | 3,15 | 2,09 | 2,31 | 2,18 | 2,2 | 2,87 | 2.73 |
| Dv90 ($\mu$m) | 12,9 | 14,7 | 70,67 | 107,27 | 161,11 | 157,88 | 66,60 | 43,30 |

Activateurs : on utilise

1. un sulfate de sodium poudre ($Na_2SO_4$) distribué par VWR-Prolabo. Le produit utilisé est pur au minimum à 99 % et présente une masse molaire de 142,040 g/mol. Il contient 43,6 % de $Na_2O$ et 56,4 % de $SO_3$ ;

2. un sulfate de lithium poudre ($Li_2SO_4$) distribué par Sigma-Aldrich. Le produit utilisé est pur au minimum à 98,0 % et présente une masse molaire de 109,94 g/mol. Il contient 27,1 % de $Li_2O$ et 72,9% de $SO_3$ ;

3. un sulfate de potassium poudre ($K_2SO_4$) distribué par Sigma-Aldrich. Le produit utilisé est pur au minimum à 98,0 % et présente une masse molaire de 174,26 g/mol. Il contient 35,6 % de $K_2O$ et 46,0 % de $SO_3$ ;

4. un hydroxyde de lithium poudre ($LiOH.H_2O$) distribué par Chemetall GMBH. Le produit contient 57 % de LiOH, soit 74,0 % de $Li_2O$ ;

5. un carbonate de sodium poudre ($Na_2CO_3$) distribué par Sigma-Aldrich. Le produit utilisé est pur au minimum à 99,0 % et présente une masse molaire de 105,99 g/mol. Il contient 58,5 % de $Na_2O$ ;

6. un chlorure de sodium poudre (NaCl) distribué par Sigma-Aldrich. Le produit utilisé est pur et présente une masse molaire de 58,44 g/mol. Il contient 53,0 % de $Na_2O$ ; et

7. un nitrate de sodium poudre ($NaNO_3$) distribué par VWR-Prolabo. Le produit utilisé est pur au minimum à 99,5

%. Il contient 36,5 % de $Na_2O$.

Adjuvant : Les produits utilisés dans les exemples sont les suivants :

- Plastifiant « Chrysoplast 209 » de Chryso, qui est de type lignosulfonate utilisé sous forme liquide et présentant un extrait sec de 34,4 % et une densité de 1,15 ;
- Plastifiant « Prelom 300 » de BASF, qui est de type polycarboxylate utilisé sous forme liquide et présentant un extrait sec de 13,7 % et une densité de 1,03 ;

Granulats : on utilise les matériaux dont la liste suit, Sable de Honfleur de diamètre maximal inférieur ou égal à 4 mm (0/4R) (sable roulé alluvionnaire ; fournisseur : Lafarge) ;

- Sable St Bonnet de diamètre maximal inférieur ou égal à 5 mm (0/5R) (sable roulé alluvionnaire ; fournisseur : Jean Lefebvre) ;
- Granulats de diamètre maximal compris de 6,3 à 10 mm (6,3/10) de Cassis (gravillons concassés ; fournisseur : Lafarge).

Exemple 1 : formulations de béton selon l'invention

Les formules qui suivent sont des formules de compositions de béton selon l'invention, à l'exception de la formule C25/30 qui est un témoin et à l'exception des formules CV1-3 et CV4-3. Les matériaux utilisés sont ceux décrits ci-dessus. Chaque nombre correspond à la masse de matériau utilisée (en kg) pour préparer 1 $m^3$ de béton, sauf pour l'eau qui est exprimée en litres pour 1 $m^3$ de béton.

| Formule C25/30 (référence) | |
|---|---|
| Granulats Cassis 6,3/10C | 900 |
| Sable Honfleur 0/4R | 900 |
| Ciment CEM I 52,5 N HTS Le Teil | 257 |
| Filler BL200 | 95 |
| Adjuvant CHRYSOPLAST 209 | 0,54 |
| Eau totale | 189 |
| Eau efficace ($E_{eff}$) | 173 |

CV1 : première série d'essais avec la cendre volante Le Havre :

| Numéro de gâchée | CV1-0 | CV1-1 | CV1-2 | CV1-3 | CV1-4 |
|---|---|---|---|---|---|
| St Bonet 0/5R | 920,0 | 920,0 | 920,0 | 920,0 | 920,0 |
| Cassis 6,3/10C | 920,0 | 920,0 | 920,0 | 920,0 | 920,0 |
| SPLC micronisé d97=16$\mu$m | 120,0 | 120,0 | 120,0 | 120,0 | 120,0 |
| Anhydrite Mazan | 8,89 | 8,89 | 8,89 | 1,19 | 1,19 |
| FILLERS CALCAIRE BL200 | 29,6 | 29,6 | 29,6 | 29,6 | 29,6 |
| **CV Le Havre** | 151,1 | 137,4 | 123,8 | 152,0 | 138,3 |
| $E_{eff}$ | 165,1 | 165,1 | 165,1 | 165,1 | 165,1 |
| Prelom 300 | 3,38 | 3,38 | 3,38 | 3,38 | 3,38 |
| **$Na_2SO_4$** | **0,00** | **13,67** | **27,34** | **6,84** | **20,51** |
| $Na_2O$éq/CV (% massique) | 2,27 % | 6,68 % | 12,06 % | 4,23 % | 8,80 % |
| $SO_3$/Clinker (% massique) | 8,01 % | 14,35 % | 20,68 % | 7,89 % | 14,23 % |

CV2 : deuxième série d'essais avec la cendre volante Popiol :

| Numéro de gâchée | CV2-0 | CV2-1 | CV2-2 | CV2-3 |
|---|---|---|---|---|
| St Bonet 0/5R | 920,0 | 920,0 | 920,0 | 920,0 |
| Cassis 6,3/10C | 920,0 | 920,0 | 920,0 | 920,0 |
| SPLC micronisé d97=16$\mu$m | 120,0 | 120,0 | 120,0 | 120,0 |
| Anhydrite Mazan | 8,56 | 8,56 | 8,56 | 1,15 |
| FILLERS CALCAIRE BL200 | 18,3 | 18,3 | 18,3 | 18,3 |
| **CV Popiol** | 151,4 | 138,4 | 123,8 | 139,3 |
| $E_{eff}$ | 165,1 | 165,1 | 165,1 | 165,1 |
| Prelom 300 | 3,26 | 3,26 | 3,26 | 3,26 |
| **$Na_2SO_4$** | **0,00** | **13,03** | **26,05** | **19,54** |
| $Na_2O$éq/CV (% massique) | 3,61 % | 7,78 % | 12,95 % | 9,79 % |
| $SO_3$/Clinker (% massique) | 7,85 % | 13,89 % | 19,91 % | 13,74 % |

CV3 : troisième série d'essais avec la cendre volante Sundance :

| Numéro de gâchée | CV3-0 | CV3-1 | CV3-2 | CV3-3 | CV3-4 |
|---|---|---|---|---|---|
| St Bonet 0/5R | 920,0 | 920,0 | 920,0 | 920,0 | 920,0 |
| Cassis 6,3/10C | 920,0 | 920,0 | 920,0 | 920,0 | 920,0 |
| SPLC micronisé d97=16$\mu$m | 120,0 | 120,0 | 120,0 | 120,0 | 120,0 |
| Anhydrite Mazan | 8,32 | 8,32 | 8,32 | 1,11 | 1,11 |
| FILLERS CALCAIRE BL200 | 9,7 | 9,7 | 9,7 | 9,7 | 9,7 |
| **CV Sundance** | 151,7 | 138,6 | 125,6 | 152,4 | 139,3 |
| Eeff | 165,1 | 165,1 | 165,1 | 165,1 | 165,1 |
| Prelom 300 | 0,63 | 0,63 | 0,63 | 0,63 | 0,63 |
| **$Na_2SO_4$** | **0,00** | **13,07** | **26,13** | **6,53** | **19,60** |
| $Na_2O$éq/CV (% massique) | 4,35 % | 8,53 % | 13,57 % | 6,21 % | 10,55 % |
| $SO_2$/Clinker (% massique) | 7,09 % | 13,20 % | 19,31 % | 7,03 % | 13,15 % |

CV4 : quatrième série d'essais avec la cendre volante TES :

| Numéro de gâchée | CV4-0 | CV4-1 | CV4-2 | CV4-3 | CV4-4 |
|---|---|---|---|---|---|
| St Bonet 0/5R | 920,0 | 920,0 | 920,0 | 920,0 | 920,0 |
| Cassis 6,3/10C | 920,0 | 920,0 | 920,0 | 920,0 | 920,0 |
| SPLC micronisé d97=16$\mu$m | 120,0 | 120,0 | 120,0 | 120,0 | 120,0 |
| Anhydrite Mazan | 8,62 | 8,62 | 8,62 | 1,15 | 1,15 |
| FILLERS CALCAIRE BL200 | 20,1 | 20,1 | 20,1 | 20,1 | 20,1 |
| **CV TES** | 151,4 | 139,2 | 126,9 | 152,7 | 140,5 |
| Eeff | 165,1 | 165,1 | 165,1 | 165,1 | 165,1 |
| Prelom 300 | 3,06 | 3,06 | 3,06 | 3,06 | 3,06 |
| **$Na_2SO_4$** | **0,00** | **12,23** | **24,46** | **6,12** | **18,35** |

(suite)

| Numéro de gâchée | CV4-0 | CV4-1 | CV4-2 | CV4-3 | CV4-4 |
|---|---|---|---|---|---|
| Na$_2$Oéq/CV (% massique) | 3,16 % | 7,06 % | 11,70 % | 4,90 % | 8,91 % |
| SO$_2$/Clinker (% massique) | 8,95 % | 14,53 % | 20,11 % | 8,60% | 14,18% |

Performances des bétons selon l'invention

Les performances des bétons selon l'invention sont évaluées pour les caractéristiques qui suivent : résistance à la compression et rhéologie.

La résistance à la compression est mesurée en fabriquant des éprouvettes cylindriques de diamètre 70, 110 ou 160 mm et d'élancement 2, en rectifiant celles-ci selon la norme NF P18-406, puis en les mettant sous charge jusqu'à la rupture. En ce qui concerne la mise en charge, le protocole consiste à entourer chaque échantillon de deux ou trois épaisseurs de ruban de cellophane, à le centrer sur le plateau inférieur d'une presse au moyen d'un gabarit de centrage (machine d'essais mécaniques de capacité 3000 kN asservie en force, conforme aux normes NF P18-411 et 412), à configurer un asservissement en force de 1 MPa/s, à effectuer la mise en charge jusqu'à la rupture selon la norme NF P18-406 et à relever la valeur de la charge à la rupture. Par la suite on en déduit la valeur de la résistance en divisant la force par la section de l'éprouvette.

Le cahier des charges visé est une moyenne arithmétique des résistances à la compression supérieure ou égale à 6 MPa à 24 h et supérieure à 30 MPa à 28 jours.

L'ensemble des résultats des mesures de résistance à la compression correspond à la moyenne arithmétique pour 3 mesures individuelles de résistance en compression.

Le résultat des mesures de résistance à la compression est reporté dans le tableau 1 ci-dessous. On constate que pour les quatre cendres testées, sans ajout d'activateur (formulations CV1-0, CV2-0, CV3-0 et CV4-0), la résistance à 28 jours ne répond pas au cahier des charges. En effet, les résistances à la compression à 28 jours des formulations sans activateurs sont respectivement de 23,3 MPa, 23,0 MPa, 28,7 MPa et 25,3 MPa. Par contre, dès qu'un activateur est utilisé et que la quantité de Na$_2$O équivalent dans la formulation est supérieure ou égale à 5 % en pourcentage massique par rapport à la masse de cendres volantes, les résistances à 28 jours sont significativement améliorées et répondent au cahier des charges. Les résistances à la compression à 28 jours des formulations selon l'invention sont comprises entre 31,1 MPa pour la formulation CV2-1 et 39,6 MPa pour la formulation CV3-2. L'augmentation de ces résistances augmente avec le dosage en activateur jusqu'à un optimum.

Afin d'améliorer encore les performances des compositions selon l'invention, l'homme du métier pourra rechercher l'optimum des dosages des différents constituants par de simples tests de routine.

D'autre part, les formulations CV1-3 et CV4-3 ne sont pas des formulations selon l'invention. En effet, la quantité de Na$_2$O équivalent dans ces formulations est inférieure à 5 % en pourcentage massique par rapport à la masse de cendres volantes. On peut constater pour ces formulations que les résistances mécaniques à la compression à 28 jours sont inférieures à 30 MPa (respectivement 28,6 MPa pour la formulation CV1-3 et 29,1 MPa pour la formulation CV4-3). L'ajout d'un activateur n'est donc pas une condition suffisante pour atteindre les performances annoncées. Il est nécessaire que la quantité de Na$_2$O équivalent dans la formulation soit supérieure ou égale à 5 % en pourcentage massique par rapport à la masse de cendres volantes.

## Tableau 1 – résistances à la compression ( Rc en MPa) jusqu'à 28 jours mesurées sur cylindre de 70 mm de diamètre.

| Numéro de gâchée | C25/30 | CV1-0 | CV1-1 | CV1-2 | CV1-3 | CV1-4 |
|---|---|---|---|---|---|---|

|  | réf |  |  |  |  |  |
|---|---|---|---|---|---|---|
| Rc 24 h (MPa) | 9,8 | 6,3 | 8,0 | 7,8 | 10,1 | 12,2 |
| Rc 28 j (MPa) | 32,2 | 23,3 | 33,2 | 32,7 | 28,6 | 34,5 |

| Numéro de gâchée | C25/30 réf | CV2-0 | CV2-1 | CV2-2 | CV2-3 |
|---|---|---|---|---|---|
| Rc 24 h (MPa) | 9,8 | 6,0 | 7,7 | 7,4 | 11,3 |
| Rc 28 j (MPa) | 32,2 | 23,0 | 31,1 | 31,5 | 32,3 |

| Numéro de gâchée | C25/30 réf | CV3-0 | CV3-1 | CV3-2 | CV3-3 | CV3-4 |
|---|---|---|---|---|---|---|
| Rc 24 h (MPa) | 9,8 | 6,5 | 7,6 | 7,8 | 9,9 | 11,7 |
| Rc 28 j (MPa) | 32,2 | 28,7 | 36,0 | 39,6 | 32,5 | 37,9 |

| Numéro de gâchée | C25/30 réf | CV4-0 | CV4-1 | CV4-2 | CV4-3 | CV4-4 |
|---|---|---|---|---|---|---|
| Rc 24 h (MPa) | 9,8 | 5,5 | 7,2 | 7,5 | 9,8 | 11,6 |
| Rc 28 j (MPa) | 32,2 | 25,3 | 35,3 | 36,2 | 29,1 | 35,7 |

On évalue également la rhéologie des compositions de béton ci-dessus. Pour cela, on effectue une mesure de l'étalement "statique" et "vibré" comme suit :
On utilise le cône ASTM décrit dans la norme ASTM C230. Le cône est positionné sur une table vibrante électromagnétique SINEX TS100 dotée d'un plateau carré de 600 mm × 600 mm (fréquence 50 Hz, amplitude 0,5 mm). La mesure d'étalement est faite sur une surface sèche. L'étalement est mesuré selon 3 directions, on retient la valeur moyenne arrondie à 5 mm près.
Pour la préparation : on introduit 2 litres de mélange sec dans la cuve ; on mélange 30 secondes à sec à petite vitesse ; on arrête le mélangeur ; on introduit la quantité totale d'eau et l'adjuvant liquide ; on malaxe 2 minutes à petite vitesse. A la fin de la gâchée, soit 2 minutes après le contact eau (T=2 min), le cône est rempli en une fois et arasé, puis on soulève le cône.

A T=3 min, on mesure l'étalement "statique" après une minute d'attente.
A T=3 min 15, on réalise une vibration à 50Hz et 0,5 mm d'amplitude durant 30 s.
A T=3 min 45, on mesure l'étalement "vibré".

Les résultats sont reportés dans le tableau 2 ci-dessous. Ils montrent que les bétons formulés selon l'invention présentent de bonnes performances en termes de rhéologie, voire aussi bonnes que celles d'un béton C25/30 classique. En effet, l'étalement vibré du béton de référence (C25/30) est de 225 mm, et l'étalement vibré des formulations selon l'invention est compris entre 203 mm pour la formulation CV1-1 et 228 mm pour la formulation CV3-4.

## Tableau 2 – performances rhéologiques (les étalements sont donnés en mm)

| Numéro de gâchée | C25/30 réf | CV1-0 | CV1-1 | CV1-2 | CV1-3 | CV1-4 |
|---|---|---|---|---|---|---|
| Etalement vibré (mm) | 225 | 228 | 203 | 205 | 213 | 210 |

| Numéro de gâchée | C25/30 réf | CV2-0 | CV2-1 | CV2-2 | CV2-3 | |
|---|---|---|---|---|---|---|
| Etalement vibré (mm) | 225 | 229 | 209 | 210 | 210 | |

| Numéro de gâchée | C25/30 réf | CV3-0 | CV3-1 | CV3-2 | CV3-3 | CV3-4 |
|---|---|---|---|---|---|---|
| Etalement vibré (mm) | 225 | 220 | 224 | 225 | 227 | 228 |

| Numéro de gâchée | C25/30 réf | CV4-0 | CV4-1 | CV4-2 | CV4-3 | CV4-4 |
|---|---|---|---|---|---|---|
| Etalement vibré (mm) | 225 | 235 | 210 | 213 | 225 | 215 |

Exemple 2 : comparaison de différents activateurs - formule type C20/25

Les trois premiers tableaux qui suivent (Activateurs 1 à 3) sont des formulations du type C20/25 selon l'invention, à l'exception de la formulation A0 qui est un témoin sans activateur. Les quatre tableaux suivants (Activateurs 4 à 7) sont des exemples comparatifs avec d'autres activateurs que ceux utilisés selon l'invention. Les matériaux utilisés sont ceux décrits ci-avant dans la première partie des exemples. Chaque nombre correspond à la masse de matériau utilisée (en kg) pour préparer 1 m$^3$ de béton. Le dosage en plastifiant (Prelom 300) est ajusté sur chaque formule afin de se situer dans la cible rhéologique : étalement vibré supérieur ou égal à 210 mm.

**Activateur 1** - sulfate de sodium ($Na_2SO_4$)

| Numéro de gâchée | A0 | A1-1 | A1-2 | A1-3 |
|---|---|---|---|---|
| St Bonet 0/5R | 920 | 920 | 920 | 920 |
| Cassis 6,3/10C | 920 | 920 | 920 | 920 |
| SPLC d97=19$\mu$m | 120 | 120 | 120 | 120 |
| Anhydrite Mazan | 0 | 0 | 0 | 0 |
| FILLERS CALCAIRE BL200 | 29,6 | 29,6 | 29,6 | 29,6 |
| CV Le Havre | 160 | 150 | 140 | 130 |
| $E_{eff}$ | 163,1 | 163,1 | 163,1 | 163,1 |
| Prelom 300 | 4,06 | 5,64 | 7,45 | 9,03 |
| **$Na_2SO_4$** | **0** | **10** | **20** | **30** |
| $Na_2O$éq/CV (% massique) | 2,2 % | 5,1 % | 8,5 % | 12,4 % |
| $SO_3$/Clinker (% massique) | 3,0 % | 6,4 % | 9,8 % | 13,2 % |

**Activateur 2** - sulfate de lithium (Li$_2$SO$_4$)

| Numéro de gâchée | A0 | A2-1 | A2-2 | A3-3 |
|---|---|---|---|---|
| St Bonet 0/5R | 920 | 920 | 920 | 920 |
| Cassis 6,3/10C | 920 | 920 | 920 | 920 |
| SPLC micronisé d97=19$\mu$m | 120 | 120 | 120 | 120 |
| Anhydrite Mazan | 0 | 0 | 0 | 0 |
| FILLERS CALCAIRE BL200 | 29,6 | 29,6 | 29,6 | 29,6 |
| CV Le Havre | 160 | 152,2 | 144,4 | 136,7 |
| Eeff | 163,1 | 163,1 | 163,1 | 163,1 |
| Prelom 300 | 4,06 | 5,64 | 6,77 | 9,03 |
| **Li$_2$SO$_4$** | **0** | **7,8** | **15,6** | **23,3** |
| Na$_2$Oéq/CV (% massique) | 2,2 % | 5,1 % | 8,3 % | 11,9 % |
| SO$_3$/Clinker (% massique) | 3,0 % | 6,4 % | 9,9 % | 13,3 % |

**Activateur 3** - sulfate de potassium (K$_2$SO$_4$)

| Numéro de gâchée | A0 | A3-1 |
|---|---|---|
| St Bonet 0/5R | 920 | 920 |
| Cassis 6,3/10C | 920 | 920 |
| SPLC micronisé d97=19$\mu$m | 120 | 120 |
| Anhydrite Mazan | 0 | 0 |
| FILLERS CALCAIRE BL200 | 29,6 | 29,6 |
| CV Le Havre | 160 | 147,8 |
| Eeff | 163,1 | 163,1 |
| Prelom 300 | 4,06 | 6,77 |
| **K$_2$SO$_4$** | **0** | **12,25** |
| Na$_2$Oéq/CV (% massique) | 2,2 % | 5,2 % |
| SO$_3$/Clinker (% massique) | 3,0 % | 6,4 % |

**Activateur 4** - hydroxyde de lithium (LiOH.H$_2$O)

| Numéro de gâchée | A0 | A4-1 |
|---|---|---|
| St Bonet 0/5R | 920 | 920 |
| Cassis 6,3/10C | 920 | 920 |
| SPLC micronisé d97=19$\mu$m | 120 | 120 |
| Anhydrite Mazan | 0 | 0 |
| FILLERS CALCAIRE BL200 | 29,6 | 29,6 |
| CV Le Havre | 160 | 154,1 |
| Eeff | 163,1 | 163,1 |
| Prelom 300 | 4,06 | 6,77 |
| **LiOH.H$_2$O** | **0** | **5,95** |

(suite)

| Numéro de gâchée | A0 | A4-1 |
|---|---|---|
| $Na_2O$éq/CV (% massique) | 2,2 % | 5,0 % |
| $SO_3$/Clinker (% massique) | 3,0 % | 3,0 % |

**Activateur 5** - carbonate de sodium ($Na_2CO_3$)

| Numéro de gâchée | A0 | A5-1 |
|---|---|---|
| St Bonet 0/5R | 920 | 920 |
| Cassis 6,3/10C | 920 | 920 |
| SPLC micronisé d97=19$\mu$m | 120 | 120 |
| Anhydrite Mazan | 0 | 0 |
| FILLERS CALCAIRE BL200 | 29,6 | 29,6 |
| CV Le Havre | 160 | 156,3 |
| Eeff | 163,1 | 163,1 |
| Prelom 300 | 4,06 | 6,32 |
| **$Na_2CO_3$** | **0** | **3,73** |
| $Na_2O$éq/CV (% massique) | 2,2 % | 3,6 % |
| $SO_3$/Clinker (% massique) | 3,0 % | 3,0 % |

**Activateur 6** - chlorure de sodium (NaCl)

| Numéro de gâchée | A0 | A6-1 | A6-2 | A6-3 |
|---|---|---|---|---|
| St Bonet 0/5R | 920 | 920 | 920 | 920 |
| Cassis 6,3/10C | 920 | 920 | 920 | 920 |
| SPLC micronisé d97=19$\mu$m | 120 | 120 | 120 | 120 |
| Anhydrite Mazan | 0 | 0 | 0 | 0 |
| FILLERS CALCAIRE BL200 | 29,6 | 29,6 | 29,6 | 29,6 |
| CV Le Havre | 160 | 155,9 | 143,5 | 135,35 |
| Eeff | 163,1 | 163,1 | 163,1 | 163,1 |
| Prelom 300 | 4,06 | 4,51 | 3,61 | 3,16 |
| **NaCl** | **0** | **8,25** | **16,5** | **24,65** |
| $Na_2O$éq/CV (% massique) | 2,2 % | 5,0 % | 8,3 % | 11,9 % |
| $SO_3$/Clinker (% massique) | 3,0 % | 3,0 % | 2,9 % | 2,9 % |

**Activateur 7** - nitrate de sodium ($NaNO_3$)

| Numéro de gâchée | A0 | A7-1 | A7-2 | A7-3 |
|---|---|---|---|---|
| St Bonet 0/5R | 920 | 920 | 920 | 920 |
| Cassis 6,3/10C | 920 | 920 | 920 | 920 |
| SPLC micronisé d97=19$\mu$m | 120 | 120 | 120 | 120 |
| Anhydrite Mazan | 0 | 0 | 0 | 0 |

(suite)

| Numéro de gâchée | A0 | A7-1 | A7-2 | A7-3 |
|---|---|---|---|---|
| FILLERS CALCAIRE BL200 | 29,6 | 29,6 | 29,6 | 29,6 |
| CV Le Havre | 160 | 148 | 136 | 124,15 |
| Eeff | 163,1 | 163,1 | 163,1 | 163,1 |
| Prelom 300 | 4,06 | 6,32 | 5,64 | 3,38 |
| **$NaNO_2$** | **0** | **12** | **24** | **35,85** |
| $Na_2O$éq/CV (% massique) | 2,2 % | 5,2 % | 8,7 % | 12,9 % |
| %$SO_3$/Clinker (% massique) | 3,0 % | 2,9 % | 2,9 % | 2,8 % |

La performance des formulations présentées ci-avant est évaluée selon le même protocole que celui de l'exemple 1 ci-avant.

Le cahier des charges visé est une résistance à la compression moyenne supérieure ou égale à 25 MPa à 28 jours.

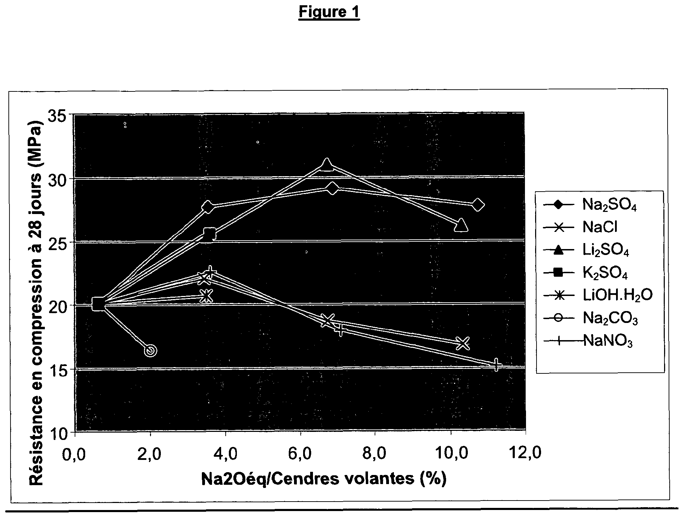

Le résultat des mesures de résistance à la compression est reporté dans le tableau 3 ci-dessous ainsi que sur la Figure 1.

Tableau 3 - résistances à la compression (en MPa) à 28 jours mesurées sur cylindre de 70 mm de diamètre.

| **Activateur 1** - sulfate de sodium ($Na_2SO_4$) | | | |
|---|---|---|---|
| Numéro de gâchée | A0 | A1-1 | A1-2 | A1-3 |
| RC 28j | 20,1 | 27,7 | 29,1 | 27,8 |
| **Activateur 2** - sulfate de lithium ($Li_2SO_4$) | | | |
| Numéro de gâchée | A0 | A2-1 | A2-2 | A2-3 |
| RC 28j | 20,1 | 25,4 | 31,0 | 26,2 |
| **Activateur 3** - sulfate de potassium ($K_2SO_4$) | | | |
| Numéro de gâchée | A0 | A3-1 | | |
| RC 28j | 20,1 | 25,6 | | |
| **Activateur 4** - hydroxyde de lithium ($LiOH.H_2O$) | | | |
| Numéro de gâchée | A0 | A4-1 | | |
| RC 28j | 20,1 | 20,7 | | |
| **Activateur 5** - carbonate de sodium ($Na_2CO_3$) | | | |
| Numéro de gâchée | A0 | A5-1 | | |
| RC 28j | 20,1 | 16,4 | | |
| **Activateur 6** - chlorure de sodium (NaCl) | | | |
| Numéro de gâchée | A0 | A6-1 | A6-2 | A6-3 |
| RC 28j | 20,1 | 22,1 | 18,8 | 16,9 |
| **Activateur 7** - nitrate de sodium ($NaNO_3$) | | | |
| Numéro de gâchée | A0 | A7-1 | A7-2 | A7-3 |
| RC 28j | 20,1 | 22,6 | 18 | 15,2 |

Les résultats indiquent que :

- La gâchée ne contenant pas d'activateur (A0) présente une résistance à la compression insuffisante à 28 jours avec 20,1 MPa.

- L'ajout de sulfates alcalins tels que le $Na_2SO_4$, $Li_2SO_4$ ou $K_2SO_4$, à une teneur supérieur à 5 % massique de $Na_2O$éq par rapport à la masse de cendres volantes, permet d'améliorer considérablement les résistances à 28 jours.
- En effet, l'ajout de sulfate de sodium conduisant une teneur de 5,1 % de $Na_2O$éq par rapport à la masse de cendres volantes permet d'augmenter la résistance à la compression à 28 jours de 20,1 MPa à 27,7 MPa. Lorsque le dosage en sulfate de sodium conduit à une teneur en $Na_2O$éq par rapport à la masse de cendres volantes de 8,5 %, la résistance à la compression à 28 jours atteint 29,1 MPa. Pour un dosage en sulfate de sodium conduisant à une teneur en $Na_2O$éq par rapport à la masse de cendres volantes de 12,4 %, la résistance à la compression à 28 jours est légèrement plus faible qu'à 8,5 %, et atteint 27,8 MPa. Il existe donc un optimum de la quantité de sulfate de sodium.
- D'autre part, l'ajout de sulfate de lithium conduisant une teneur de 5,1 % de $Na_2O$éq par rapport à la masse de cendres volantes permet d'augmenter la résistance à la compression à 28 jours de 20,1 MPa à 25,4 MPa. Lorsque le dosage en sulfate de lithium conduit à une teneur en $Na_2O$éq par rapport à la masse de cendres volantes de 8,3 %, la résistance à la compression à 28 jours atteint 31,0 MPa. Pour un dosage en sulfate de lithium conduisant à une teneur en $Na_2O$éq par rapport à la masse de cendres volantes de 11,9 %, la résistance à la compression à 28 jours est légèrement plus faible qu'à 8,3 %, et atteint 26,2 MPa. Il existe donc également un optimum de la quantité de sulfate de lithium.
- Par ailleurs, l'ajout sulfate de potassium conduisant une teneur de 5,2 % de $Na_2O$éq par rapport à la masse de cendres volantes permet d'augmenter la résistance à la compression à 28 jours de 20,1 MPa à 25,6 MPa.
- Au contraire, l'ajout d'hydroxyde de lithium conduisant à une teneur de 5,0 % de $Na_2O$éq par rapport à la masse de cendres volantes conduit à un effet très limité sur la résistance à la compression à 28 jours, qui passe de 20,1 MPa à 20,7 MPa. Il n'a pas été possible d'augmenter le dosage en hydroxyde de lithium. En effet, au-delà du dosage testé, les performances rhéologiques sont trop dégradées et ne peuvent plus être compensées par une augmentation du dosage en plastifiant (Prelom 300).
- De même, l'ajout de carbonate de sodium conduisant une teneur de 3,6 % de $Na_2O$éq par rapport à la masse de cendres volantes conduit à une perte de résistance à la compression à 28 jours, qui passe de 20,1 MPa à 16,4 MPa. Il n'a pas été possible d'utiliser le carbonate de sodium afin de dépasser le seuil de 5 % de $Na_2O$éq par rapport à la masse de cendres volantes, les performances rhéologiques étant trop dégradées et ne peuvent plus être compensées par une augmentation du dosage en plastifiant (Prelom 300).
- De manière similaire, l'ajout de chlorure de sodium conduisant une teneur de 5,0 % de $Na_2O$éq par rapport à la masse de cendres volantes conduit à un effet très limité sur la résistance à la compression à 28 jours, qui passe de 20,1 MPa à 22,1 MPa. Lorsque l'on augmenter le dosage en chlorure de sodium, les résistances diminuent et deviennent inférieures à celles de la formule sans activateur.
- De même, l'ajout de nitrate de sodium conduisant une teneur de 5,2 % de $Na_2O$éq par rapport à la masse de cendres volantes conduit à un effet très limité sur la résistance en compression à 28 jours, qui passe de 20,1 MPa à 22,6 MPa. Lorsque l'on augmente le dosage en nitrate de sodium, les résistances diminuent et deviennent inférieures à celles de la formule sans activateur.

En conclusion, les sulfates alcalins sont les seuls activateurs testés permettant de répondre au cahier des charges d'une résistance à la compression moyenne supérieure ou égale à 25 MPa à 28 jours.

**Revendications**

1. Composition de béton humide, comprenant de 140 à 220 l/m$^3$ d'eau efficace en association avec :

- au moins 10 % du pré-mélange liant sec comprenant, en proportions massiques :

- du clinker Portland présentant une surface spécifique Blaine comprise de 5500 à 8000 cm$^2$/g, la quantité minimale dudit clinker en pourcentage massique par rapport à la masse totale du pré-mélange correspondant à la valeur déterminée selon la formule (I) suivante :

$$\left[-6.10^{-3} \times SSB_k\right] + 75$$

Formule (I)

dans laquelle $SSB_k$ est la surface spécifique Blaine du clinker exprimée en cm$^2$/g ;
- des cendres volantes;

- au moins un sulfate alcalin, la quantité de sulfate alcalin étant telle que la quantité de $Na_2O$ équivalent dans le pré-mélange est supérieure ou égale à 5 % en pourcentage massique par rapport à la masse de cendres volantes ;
- au moins une source de $SO_3$, en une quantité telle que la quantité de $SO_3$ dans le pré-mélange est supérieure ou égale à 2 % en pourcentage massique par rapport à la masse de clinker Portland ;
- des matériaux complémentaires présentant un Dv90 inférieur ou égal à 200 $\mu$m choisis parmi les poudres calcaires ;

la quantité de clinker + la quantité de cendres volantes étant supérieure ou égale à 75 %, de préférence 78 %, en pourcentage massique par rapport à la masse totale du pré-mélange ; la quantité totale de clinker dans le pré-mélange étant strictement inférieure à 60 % en pourcentage massique par rapport à la masse totale du pré-mélange,
- jusqu'à 90 % de granulats ;

les pourcentages massiques en pré-mélange et en granulat étant exprimés par rapport à la masse totale sèche de la composition.

2. Composition de béton humide selon la revendication 1, dans laquelle le pré-mélange liant sec comprend en outre au moins une source de calcium.

3. Composition de béton humide selon la revendication 1 ou 2, dans laquelle le sulfate alcalin est choisi parmi le sulfate de sodium, le sulfate de potassium, le sulfate de lithium et leurs mélanges.

4. Composition de béton humide selon l'une des revendications 1 à 3, dans laquelle le sulfate alcalin est le sulfate de sodium.

5. Composition de béton humide selon l'une des revendications 2 à 4, dans laquelle la source de calcium est choisie parmi les sels de calcium et leurs mélanges.

6. Objet en béton durci de la composition selon l'une quelconque des revendications 1 à 5.

7. Procédé de préparation d'une composition de béton humide comprenant une étape de : gâchage d'au moins 10 % du pré-mélange tel que décrit dans l'une des revendications 1 à 5, avec jusqu'à 90 % de granulats et de 140 à 220 l/m$^3$ d'eau efficace.

8. Procédé de préparation d'un béton humide coulé, comprenant une étape de :

- coulage d'une composition de béton humide selon l'une quelconque des revendications 1 à 5 ou d'une composition de béton humide obtenue selon le procédé de la revendication 7.

9. Procédé de fabrication d'un objet en béton, comprenant une étape de :

- durcissement d'une composition de béton humide selon l'une quelconque des revendications 1 à 5, d'une composition de béton humide obtenue selon le procédé de la revendication 7 ou d'une composition de béton humide coulée selon la revendication 8.

10. Utilisation d'au moins un sulfate alcalin et d'éventuellement au moins une source de calcium pour activer les cendres volantes dans une composition de béton humide selon l'une quelconque des revendications 1 à 5 ou dans un des procédés selon les revendications 7 à 9.

**Patentansprüche**

1. Nassbetonzusammensetzung, die von 140 bis 220 l/m$^3$ wirksames Wasser in Verbindung mit Folgendem umfasst:

- mindestens 10 % von der trockenen Bindemittelvormischung, die in Massenanteilen umfasst:
- Portlandklinker, der eine spezifische Oberfläche (Blaine) zwischen 5500 und 8000 cm$^2$/g aufweist, wobei die Mindestmenge des Klinkers in Massenprozent im Verhältnis zur Gesamtmasse der Vormischung dem gemäß der folgenden Formel (I) bestimmten Wert entspricht:

$$[-6.10^{-3} \times SSB_k] + 75$$
$$\text{Formel (I)}$$

wobei $SSB_k$ die spezifische Oberfläche (Blaine) des Klinkers, ausgedrückt in $cm^2/g$, ist;
- Flugaschen;
- mindestens ein Alkalisulfat, wobei die Menge an Alkalisulfat derart ist, dass die Menge an äquivalentem $Na_2O$ in der Vormischung größer oder gleich 5 % in Massenprozent im Verhältnis zur Masse an Flugaschen ist;
- mindestens eine Quelle für $SO_3$ in einer Menge, die derart ist, dass die Menge an $SO_3$ in der Vormischung größer oder gleich 2 % in Massenprozent im Verhältnis zur Portlandklinkermasse ist;
- ergänzende Materialien, die einen Dv90 von kleiner oder gleich 200 $\mu$m aufweisen, die aus Kalkpulvern ausgewählt sind;
wobei die Menge an Klinker + die Menge an Flugaschen größer oder gleich 75 %, vorzugsweise 78 %, in Massenprozent im Verhältnis zur Gesamtmasse der Vormischung ist;
wobei die Gesamtmasse an Klinker in der Vormischung strikt kleiner als 60 % in Massenprozent im Verhältnis zur Gesamtmasse der Vormischung ist,
- bis zu 90 % Granulate;

wobei die Massenprozente in Vormischung und Granulat im Verhältnis zur Gesamttrockenmasse der Zusammensetzung ausgedrückt sind.

2. Nassbetonzusammensetzung nach Anspruch 1, wobei die trockene Bindemittelvormischung ferner mindestens eine Calciumquelle umfasst.

3. Nassbetonzusammensetzung nach Anspruch 1 oder 2, wobei das Alkalisulfat aus Natriumsulfat, Kaliumsulfat, Lithiumsulfat und ihren Mischungen ausgewählt ist.

4. Nassbetonzusammensetzung nach einem der Ansprüche 1 bis 3, wobei das Alkalisulfat das Natriumsulfat ist.

5. Nassbetonzusammensetzung nach einem der Ansprüche 2 bis 4, wobei die Calciumquelle aus Calciumsalzen und ihren Mischungen ausgewählt ist.

6. Gegenstand aus Festbeton mit der Zusammensetzung nach einem der Ansprüche 1 bis 5.

7. Verfahren zur Herstellung einer Nassbetonzusammensetzung, das einen folgenden Schritt umfasst:

Anrühren von mindestens 10 % der Vormischung nach einem der Ansprüche 1 und 5 mit bis zu 90 % Granulaten und 140 bis 220 l/m³ wirksamem Wasser.

8. Verfahren zur Herstellung eines Gussnassbetons, das einen folgenden Schritt umfasst:

- Gießen einer Nassbetonzusammensetzung nach einem der Ansprüche 1 bis 5 oder einer mit dem Verfahren nach Anspruch 7 erhaltenen Nassbetonzusammensetzung.

9. Verfahren zur Fertigung eines Betongegenstands, das einen folgenden Schritt umfasst:

- Härten einer Nassbetonzusammensetzung nach einem der Ansprüche 1 bis 5, einer mit dem Verfahren nach Anspruch 7 erhaltenen Nassbetonzusammensetzung oder einer Gussnassbetonzusammensetzung nach Anspruch 8.

10. Verwendung mindestens eines Alkalisulfats und gegebenenfalls mindestens einer Calciumquelle zum Aktivieren der Flugaschen in einer Nassbetonzusammensetzung nach einem der Ansprüche 1 bis 5 oder in einem der Verfahren nach Anspruch 7 bis 9.

**Claims**

1.  A wet concrete composition, comprising from 140 to 220 l/m$^3$ of effective water in combination with:

    - at least 10% of the dry binder premix comprising, in mass proportions:
    - Portland clinker having a Blaine specific surface area comprised from 5500 to 8000 cm$^2$/g, the minimum quantity of the said clinker by mass percentage relative to the total mass of the premix being determined according to the following formula (I):

    $$[-6.10^{-3} \times BSS_k] + 75$$

    $$\text{Formula (I)}$$

    in which $BSS_k$ is the Blaine specific surface area of the clinker given in cm$^2$/g ;
    - fly ash;
    - at least one alkali sulfate, the quantity of alkali sulfate being such that the quantity of equivalent Na$_2$O in the premix is greater than or equal to 5 % by mass percentage relative to the mass of fly ash;
    - at least one source of SO$_3$, in a quantity such that the quantity of SO$_3$ in the premix is greater than or equal to 2 % by mass percentage relative to the mass of Portland clinker;
    - complementary materials having a Dv90 less than or equal to 200 μm selected from limestone powders;
    the quantity of clinker + the quantity of fly ash being greater than or equal to 75 %, preferably 78 %, by mass percentage relative to the total mass of the premix;
    the total quantity of clinker in the premix being strictly less than 60 % by mass percentage relative to the total mass of the premix,
    - up to 90 % of aggregates;

    the mass percentages of premix and aggregate being given relative to the total dry mass of the composition.

2.  The wet concrete composition according to claim 1, wherein the dry binder premix further comprises at least one source of calcium.

3.  The wet concrete composition according to claim 1 or 2, wherein the alkali sulfate is selected from sodium sulfate, potassium sulfate, lithium sulfate and mixtures thereof.

4.  The wet concrete composition according to one of claims 1 to 3, wherein the alkali sulfate is sodium sulfate.

5.  The wet concrete composition according to one of claims 2 to 4, wherein the source of calcium is selected from calcium salts and mixtures thereof.

6.  A hardened concrete object of the composition according to any one of claims 1 to 5.

7.  A process for the preparation of a wet concrete composition comprising a step of:

    mixing at least 10% of the premix as described in one of claims 1 to 5, with up to 90% of aggregates and 140 to 220 l/m$^3$ of effective water.

8.  A process for the preparation of a cast wet concrete, comprising a step of:

    - casting a wet concrete composition according to any one of claims 1 to 5 or a wet concrete composition obtained according to the process of claim 7.

9.  A process for the production of a concrete object, comprising a step of:

    - hardening of a wet concrete composition according to any one of claims 1 to 5, of a wet concrete composition obtained according to the process of claim 7 or of a wet concrete composition cast according to claim 8.

10. Use of at least one alkali sulfate and optionally at least one source of calcium to activate the fly ash in a wet concrete composition according to any one of claims 1 to 5 or in one of the processes according to claims 7 to 9.

**Figure 1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 990627 A
- WO 2006032785 A
- WO 2006032786 A

**Littérature non-brevet citée dans la description**

- **A. A. PETROSJAN.** Le problème de la découverte d'une loi empirique. *Voprosy Filosofii Moskva,* 1983, 71-79
- **GÉRALD BAILLARGEON.** Méthodes statistiques Volume 2 - Méthodes d'analyse de régression linéaire simple et de régression multiple - Analyse de corrélation linéaire simple. vol. 2